(19) Europäisches Patentamt
European Patent Office
Office européen des brevets

(11) **EP 3 669 440 B1**

(12) **EUROPÄISCHE PATENTSCHRIFT**

(45) Veröffentlichungstag und Bekanntmachung des Hinweises auf die Patenterteilung:
**04.01.2023 Patentblatt 2023/01**

(21) Anmeldenummer: **18759597.0**

(22) Anmeldetag: **20.08.2018**

(51) Internationale Patentklassifikation (IPC):
***H02K 1/27*** (2022.01)

(52) Gemeinsame Patentklassifikation (CPC):
**H02K 1/2773; H02K 1/30**

(86) Internationale Anmeldenummer:
**PCT/EP2018/072445**

(87) Internationale Veröffentlichungsnummer:
**WO 2019/072446 (18.04.2019 Gazette 2019/16)**

(54) **ROTOR EINER ELEKTRISCHEN MASCHINE**

ROTOR OF AN ELECTRIC MACHINE

ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2017 DE 102017218152**

(43) Veröffentlichungstag der Anmeldung:
**24.06.2020 Patentblatt 2020/26**

(73) Patentinhaber: **Baumüller Nürnberg GmbH 90482 Nürnberg (DE)**

(72) Erfinder:
• **KURFÜRST, Jiri 59301 Bystrice nad Pernstejnem (CZ)**
• **SWARTE, Matthias 90610 Winkelhald (DE)**
• **TAFELMAYER, Florian 90482 Nürnberg (DE)**

(74) Vertreter: **FDST Patentanwälte Nordostpark 16 90411 Nürnberg (DE)**

(56) Entgegenhaltungen:
**EP-A1- 0 413 183         DE-A1-102015 216 051
US-A1- 2014 225 470     US-A1- 2015 357 892**

**Beschreibung**

Die Erfindung betrifft einen Rotor einer elektrischen Maschine, mit einem eine Welle umfangsseitig umgebenden Rotorkörper, und mit einer Anzahl an Magneten. Jeder der Magneten ist jeweils innerhalb einer radial verlaufenden Tasche des Rotorkörpers angeordnet. Die Erfindung betrifft ferner eine elektrische Maschine. Die elektrische Maschine ist jeweils insbesondere ein Elektromotor.

Industrieanlagen weisen üblicherweise Aktoren auf, die mittels eines Elektromotors angetrieben sind. So werden beispielsweise bei der Kunststoffverarbeitung und der Kunststoffherstellung etwaige Förderschnecken oder Pressstempel üblicherweise mittels eines Elektromotors angetrieben. Somit ist eine Bereitstellung und Verlegung von pneumatischen oder hydraulischen Leitungen nicht erforderlich, was eine Wartung und daher einen Aufwand verringert. Hierbei ist beispielsweise ein Stempel oder eine Schnecke eines Kunststoffspritzgeräts mittels des Elektromotors angetrieben. Eine weitere Verwendung von Elektromotoren findet sich zum Beispiel im maritimen Bereich, wobei der Elektromotor beispielsweise in einer Gondel an einem Rumpf eines Schiffs angebracht ist. Aufgrund der vergleichsweise kompakten Bauweise des Elektromotors ist es möglich, die Gondel bezüglich des Rumpfes zu verschwenken, was eine Manövrierbarkeit des Schiffs erhöht.

Bei den oben genannten Anwendungsfällen für den Elektromotor ist es erforderlich, dass mittels diesem ein vergleichsweise hohes Drehmoment bereitgestellt wird. Aufgrund einer meist beengten Einbaulage ist ein Platz für ein Getriebe nicht gegeben oder zumindest beschränkt. Folglich kann das Drehmoment nicht, oder zumindest nicht vollständig, mittels einer Herabsetzung einer vergleichsweise hohen Drehzahl des Elektromotors bereitgestellt werden. Der Elektromotor ist üblicherweise bürstenlos ausgestaltet, was einen Verschleiß verringert. Die Bestromung des Elektromotors erfolgt üblicherweise mittels eines Umrichters, der insbesondere eine Brückenschaltung, wie eine B6-Schaltung aufweist. Hierbei kann ein Feldstrom in den bürstenlos ausgestalteten Elektromotor eingeprägt werden, was zu einer Ausbildung eines Reluktanzmoments führt.

Damit sich ein Reluktanzdrehmoment ausbildet, ist es erforderlich, dass ein Rotor des Elektromotors in unterschiedliche Richtungen unterschiedliche Drehmomente aufweist. Dies wird mittels Anordnung von Permanentmagneten in Taschen eines Blechpakets des Rotors realisiert. Aufgrund einer derartigen Anordnung ergeben sich jedoch magnetische Kurzschlüsse innerhalb des Blechpakets, was wiederum zu einer Herabsetzung des Drehmoments führt.

In US 2015/357982 A1 ist Motor mit Permanentmagneten offenbart. Ein Rotorkörper weist Kammern auf, innerhalb derer die Permanentmagneten angeordnet sind. Aus EP 0 413 183 A1 ist ein bürstenloser Synchronmotor bekannt. An einem Rotor sind außenseitig Permanentmagneten angeordnet.

In DE 10 2015 216 051 A1 ist ein Rotor einer permanenterregten elektrische Maschine gezeigt. Die Permanentmagneten sind in außenseitig an einem Rotorkörpers angeordneten Taschen eingelegt.

Dokument US2014225470 offenbart einen Rotor mit Flusskonzentrationsmagneten und einer Struktur, die durch zwei oder drei konzentrische Hohlzylinder gebildet wird,

Der Erfindung liegt die Aufgabe zugrunde, einen besonders geeigneten Rotor einer elektrischen Maschine sowie eine besonders geeignete elektrische Maschine anzugeben, wobei vorteilhafterweise ein Drehmoment erhöht ist.

Hinsichtlich des Rotors wird diese Aufgabe durch die Merkmale des Anspruchs 1 und hinsichtlich der elektrischen Maschine durch die Merkmale des Anspruchs 9 erfindungsgemäß gelöst. Vorteilhafte Weiterbildungen und Ausgestaltungen sind Gegenstand der jeweiligen Unteransprüche.

Der Rotor ist ein Bestandteil einer elektrischen Maschine. Die elektrische Maschine ist beispielsweise bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 30 kW und 150 kW, zwischen 40 kW und 140 kW oder zwischen 60 kW und 100 kW und insbesondere gleich 80 kW auf, wobei jeweils zum Beispiel eine Abweichung von 10 kW, 5 kW, 2 kW oder 0 kW vorhanden ist. Geeigneterweise weist die elektrische Maschine eine Drehzahl, beispielsweise eine Nenndrehzahl oder maximale Drehzahl, zwischen 200 1/min. und 8.000 1/min., zwischen 300 1/min. und 6.000 1/min., zwischen 500 1/min. und 5.000 1/min. oder zwischen 1.000 1/min. und 4.000 1/min. auf, wobei insbesondere eine Abweichung von 100 1/min., 50 1/min., 20 1/min. oder 0 1/min. vorhanden ist. Besonders bevorzugt weist die elektrische Maschine ein Drehmoment, beispielsweise ein Maximales- und/oder Nenndrehmoment zwischen 100 Nm und 20.000 Nm, zwischen 165 Nm und 17.500 Nm, zwischen 200 Nm und 15.000 Nm, zwischen 500 Nm und 10.000 Nm oder zwischen 5.000 Nm und 8.000 Nm auf, wobei insbesondere jeweils eine Abweichung von 50 Nm, 20 Nm, 10 Nm oder 0 Nm vorhanden ist. Die elektrische Maschine ist insbesondere ein Innenläufer. Der Elektromotor ist bevorzugt ein Torque-Motor mit einer integrierten Elektronik, und ein Umrichter ist insbesondere aufgesetzt, zweckmäßigerweise auf ein B-seitiges Lagerschild. Unter Torque-Motor wird insbesondere ein hochpoliger, elektrischer Direktantrieb aus der Gruppe der Langsamläufer verstanden. Zweckmäßigerweise weist der Torque-Motor mehr als 20, 40 oder 60 Pole auf.

Die elektrische Maschine ist beispielsweise ein Bestandteil einer Servopresse. Mit anderen Worten wird mittels der elektrischen Maschine insbesondere eine Presse angetrieben. Alternativ hierzu ist die elektrische Maschine ein Bestandteil eines Schiffsantriebs, welcher insbesondere vorgesehen und eingerichtet ist, innerhalb einer Gondel an einem Rumpf eines Schiffs montiert zu werden. Alternativ hierzu wird die elektrische Maschine bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels der elektrischen Maschine angetrieben.

Der Rotor weist einen Rotorkörper auf, der eine Welle umfangsseitig umgibt. Die Welle erstreckt sich entlang einer Achse in einer Axialrichtung und ist beispielsweise zylindrisch oder hohlzylindrisch ausgestaltet. Der Rotorkörper ist im Wesentlichen hohlzylindrisch ausgestaltet und erstreckt sich in der axialen Richtung. Vorzugsweise ist der Rotorkörper aus einem ferromagnetischen Material erstellt, wie Eisen. Geeigneterweise ist der Rotorkörper drehfest an der Welle befestigt. Insbesondere sind der Rotorkörper und die Welle konzentrisch zueinander angeordnet und/oder beispielsweise drehsymmetrisch bezüglich der Achse. Insbesondere ist der Rotor vorgesehen und eingerichtet im Montagezustand drehbar um die Achse gelagert zu sein, die somit eine Rotationsachse bildet. Vorzugsweise steht die Welle in axialer Richtung über den Rotorkörper über.

Der Rotorkörper weist Taschen auf, die im Wesentlichen radial verlaufen. Mit anderen Worten liegt jede der Taschen auf einer bezüglich des Rotorkörpers radialen Geraden, wobei die radiale Gerade die Achse der Welle schneidet. Die Taschen sind in Axialrichtung verlaufende Aussparungen innerhalb des Rotorkörpers, wobei die Ausdehnung des Querschnitts jeder der Taschen senkrecht zur Achse in radialer Richtung größer als in tangentialer Richtung ist. Insbesondere ist die Tasche im Wesentlichen achsensymmetrisch bezüglich der jeweiligen radial verlaufenden Geraden. Vorzugsweise sind die Taschen zueinander baugleich. Beispielsweise sind die Taschen jeweils quaderförmig ausgestaltet.

Zudem weist der Rotor eine Anzahl an Magneten auf, die insbesondere Permanentmagneten sind. Die Magneten sind in den Taschen angeordnet, wobei insbesondere jeder Tasche jeweils einer der Magneten zugeordnet ist. Die Taschen selbst sind miteinander geeigneterweise nicht verbunden und zueinander beabstandet. Zweckmäßigerweise ist die Anzahl der Magneten gleich der Anzahl der Taschen. Insbesondere sind die Magneten und/oder die Taschen zueinander baugleich und vorzugsweise drehsymmetrisch bezüglich der Achse (der Welle) angeordnet. Insbesondere nimmt jede der Taschen jeweils den zugeordneten Magneten vollständig auf. Mit anderen Worten umgibt die Begrenzung der Tasche den jeweils zugeordneten Magneten umfangsseitig, also insbesondere in tangentialer und/oder radialer Richtung vollständig. Folglich sind die Magneten ebenfalls im Wesentlichen in radialer Richtung angeordnet und der Rotor weist somit ein sogenanntes "spoke"-Design (Speichendesign) auf. Insbesondere sind die Taschen bezüglich eines Außenumfangs des Rotors und/oder des Rotorkörpers radial nach innen versetzt. Mit anderen Worten handelt es sich bei den Magneten um vergrabene Magneten.

Jede der Taschen ist mittels eines axial verlaufenden Schlitzes mit jeweils einer radial innenliegenden Kammer des Rotorkörpers verbunden. Mit anderen Worten ist jede der Taschen mittels des jeweils zugeordneten Schlitzes zu der zugeordneten radial innenliegenden Kammer geöffnet. Die Kammer selbst ist eine Aussparung und bezüglich der jeweils zugeordneten Tasche radial nach innen versetzt. Der axial verlaufende Schlitz ist zum Beispiel eine axial verlaufende Öffnung. Geeigneterweise weist der Rotorkörper genauso viele Kammern wie Taschen auf, und jeder Tasche ist jeweils eine der Kammern zugeordnet. Die Kammern selbst sind frei von den Magneten. Mit anderen Worten ist innerhalb der Kammern keiner der Magneten vorhanden. Vorzugsweise sind die Kammern zueinander baugleich und beispielsweise drehsymmetrisch bezüglich der Achse der Welle angeordnet. Die Kammern selbst sind miteinander geeigneterweise nicht verbunden und zueinander beabstandet. Zweckmäßigerweise ist jede Kammer achsensymmetrisch bezüglich der radialen Gerade der jeweils zugeordneten Tasche.

Aufgrund der innenliegenden Kammer ist eine Ausbildung von Magnetfeldlinien der einzelnen Magneten verändert. Insbesondere ist die Kammer im Wesentlichen frei von Magnetfeldlinien. Infolgedessen bilden sich die Magnetfeldlinien im Wesentlichen auf der der Kammer gegenüberliegenden Seite aus. Das Drehmoment des Rotors ist insbesondere:

$$M = \frac{3}{2} \cdot p\left(\Psi_{PM} \cdot I_q + \left(L_d - L_q\right)I_d \cdot I_q\right)$$

Hierbei ist $L_d$ und $L_q$ aufgrund der Geometrie des Rotors vorgegeben. Wegen der Kammern sind $L_d$ und $L_q$ unterschiedlich und die Differenz zwischen diesen vergleichsweise groß. Infolgedessen weist der Rotor ein Reluktanzmoment auf, und mittels geeigneter Bestromung ist somit das Drehmoment erhöht. Aufgrund der einzelnen Kammern ist die mechanische Steifigkeit lediglich vergleichsweise gering verkleinert, weswegen ein vergleichsweise robuster Motor bereit gestellt ist.

Beispielsweise ist die Ausdehnung des Schlitzes in tangentialer Richtung gleich der Ausdehnung der Tasche in tangentialer Richtung, sodass der Schlitz mit der Tasche fluchtet. Vorzugsweise jedoch ist die Ausdehnung des Schlitzes in tangentialer Richtung geringer als die Ausdehnung der jeweiligen Tasche. Infolgedessen ist eine Bewegung des Magneten in radialer Richtung nach innen aufgrund der verringerten Ausdehnung des Schlitzes insbesondere unterbunden. Beispielsweise ist der Schlitz mittels eines oder zweier gegenüber angeordneter Vorsprünge gebildet, die teilweise einen radial nach innen versetzten Boden der jeweiligen Tasche bilden.

Geeigneterweise ist der Querschnitt jeder Kammer gerundet, insbesondere senkrecht zur axialen Richtung. Beispielsweise ist der Querschnitt kreisförmig und rund. Aufgrund der gerundeten Ausgestaltung ist eine Ableitung von Kräften, die aufgrund einer Wechselwirkung der Magneten mit weiteren Bestandteilen der elektrischen Maschine hervorgerufen werden, auf die Welle sowie umgekehrt verbessert, was eine mechanische Steifigkeit erhöht. Alternativ hierzu ist der Querschnitt jeder Kammer beispielsweise ein regelmäßiges Vieleck, wobei die Ecken zweckmäßigerweise abgerundet sind. Beispielsweise ist der Querschnitt ein Viereck, insbesondere ein Rechteck, ein Sechseck oder ein Achteck und somit wabenförmig. Aufgrund der achteckförmigen Ausgestaltung ist hierbei eine Festigkeit erhöht, wobei ein vergleichsweise großes Volumen der jeweiligen Kammer bereit gestellt ist. Alternativ ist das Vieleck bevorzugt ein Dreieck, welches insbesondere die Vorteile der gerundeten sowie achteckförmigen Ausgestaltung aufweist. Sofern das Vieleck ein Rechteck ist, ist dieses zweckmäßigerweise im Wesentlichen tangential angeordnet.

Vorzugsweise weist der Rotorkörper weitere Öffnungen auf, die jedoch beispielsweise von der Tasche sowie der Kammer beabstandet sind. Insbesondere sind die Öffnungen drehsymmetrisch bezüglich der Achse angeordnet. Aufgrund der Öffnungen werden insbesondere die Magnetfeldlinien weiter geeignet geformt. Zweckmäßigerweise sind in tangentialer Richtung zwischen benachbarten Taschen die Öffnungen zumindest teilweise angeordnet. Die Öffnungen verlaufen insbesondere in axialer Richtung. Alternativ oder in Kombination hierzu weist der Rotorkörper weitere Öffnungen auf, wobei jeder der Kammern eine der weiteren Öffnungen (erste Öffnung) zugeordnet und bezüglich dieser radial nach innen versetzt ist. Insbesondere sind die Öffnungen symmetrisch zu der jeweils zugeordneten radialen Geraden ausgestaltet.

Alternativ sind beispielsweise weitere Öffnungen bezüglich der Kammern in tangentialer Richtung versetzt, sodass zwischen benachbarten Kammern insbesondere jeweils eine weitere Öffnung vorhanden ist. Beispielsweise sind somit die Kammern und die weiteren Öffnungen mittels Stegen voneinander getrennt, die beispielsweise eine im Wesentlichen konstante Dicke aufweisen. Aufgrund der weiteren Öffnungen werden die Magnetfeldlinien der Magneten geeignet geformt, wobei aufgrund der Abgeschlossenheit der Öffnungen eine mechanische Stabilität vergleichsweise verringert ist.

Beispielsweise ist die Ausdehnung jeder Kammer in tangentialer Richtung kleiner oder gleich als die Ausdehnung der jeweils zugeordneten Tasche in tangentialer Richtung. Besonders bevorzugt jedoch ist die Ausdehnung jeder Kammer in tangentialer Richtung größer als die Ausdehnung der jeweils zugeordneten Tasche in tangentialer Richtung, insbesondere um mehr als das 1,5-, 2- oder 3-fache. Mit anderen Worten steht die Kammer in tangentialer Richtung bezüglich der jeweils zugeordneten Tasche über, insbesondere beidseitig. Hierbei ist die Ausdehnung der Kammer in tangentialer Richtung vorzugsweise größer als die Ausdehnung des der zugeordneten Tasche zugeordneten Magneten in tangentialer Richtung.

Infolgedessen wird eine Ausbreitung der mittels des Magneten bereitgestellten Magnetfeldlinien ins radial Innere. des Rotorkörpers im Wesentlichen vollständig unterbunden, weswegen das Drehmoment des Rotors weiter erhöht ist.

Geeigneterweise ist zwischen jeder Tasche und dem zugeordneten Magneten eine Spielpassung erstellt, zumindest in tangentialer Richtung. Folglich liegt der jeweilige Magnet in tangentialer Richtung an der Begrenzung der jeweiligen Tasche an, vorzugsweise mechanisch direkt. Insbesondere ist jeder der Magneten mit einer Beschichtung versehen, was beispielsweise eine Oxidation oder dergleichen des Permanentmagneten verhindert. Die Beschichtung ist beispielsweise ein Harz, wie ein Epoxidharz. Aufgrund der Spielpassung ist ein Einführen der Magneten in die jeweils zugeordnete Tasche erleichtert. Zudem ist ein Abscheren oder eine sonstige Beschädigung einer etwaigen Beschichtung der Magneten verhindert.

Beispielsweise sind die Magneten in radialer Richtung magnetisiert. Besonders bevorzugt sind die Magneten in tangentialer Richtung magnetisiert, wobei sich die Magnetisierungsrichtung jeweils direkt benachbarter Permanentmagneten zweckmäßigerweise unterscheiden. Mit anderen Worten weisen jeweils Nordpole bzw. Südpole aufeinander zu. Infolgedessen treten die Magnetfeldlinien im Wesentlichen in tangentialer Richtung zwischen den Taschen aus dem Rotorkörper aus bzw. ein, wobei aufgrund der Kammern ein Ausbreiten nach radial innen im Wesentlichen verhindert ist.

Beispielsweise ist jede der Kammern mit Luft befüllt. Besonders bevorzugt ist jede der Kammern mit einem para- oder diamagnetischen Füllstoff befüllt, welcher insbesondere ein Feststoff ist. Beispielsweise wird bei Herstellung der Füllstoff in axialer Richtung in die Kammern eingeführt. Besonders bevorzugt ist der Füllstoff ein Verguss, welcher zur Befüllung insbesondere zunächst in einen flüssigen Zustand verbracht wird und in der jeweiligen Kammer ausgehärtet wird. Insbesondere ist der Füllstoff ein Epoxidharz. Aufgrund des Füllstoffes ist eine mechanische Integrität des Rotorkörpers erhöht. Wegen der para- oder diamagnetischen Eigenschaft des Füllstoffes ist ein Ausbreiten der Magnetfeldlinien auf der radialen Innenseite verhindert.

Beispielsweise ist der Rotorkörper einstückig erstellt oder aus mehreren Stücken zusammengesetzt. Insbesondere ist hierbei der Rotorkörper mittels Sintern, erstellt. Besonders bevorzugt jedoch ist der Rotorkörper ein Blechpaket oder umfasst zumindest dieses. Die Ausdehnung der Bleche des Blechpakets ist insbesondere senkrecht zur Axialrichtung (axialen Richtung) des Rotors. In axialer Richtung weist jedes der Bleche beispielsweise eine Ausdehnung zwischen einem Millimeter (mm) und 0,1 Millimeter, zwischen 0,8 Millimeter und 0,2 Millimetern und beispielsweise im Wesentlichen gleich 0,5 Millimeter auf. Insbesondere ist mittels jedes der Bleche eine Lage des Rotorkörpers gebildet. Insbesondere ist jede Lage einstückig mit einem einzigen Blech erstellt. Alternativ hierzu weist jede der Lagen eine Anzahl an aneinander gefügten oder geeignet positionierten Blechschnitten auf. Insbesondere sind die Blechlagen in axialer Richtung aufeinander gestapelt.

Beispielsweise sind sämtliche Lagen der Bleche baugleich. Besonders bevorzugt jedoch weist der Rotorkörper zumindest zwei Teilkörper, beispielsweise zwischen zwei Teilkörper und acht Teilkörper und insbesondere fünf Teilkörper auf. Hierbei unterscheiden sich die Blechlagen insbesondere zwischen den einzelnen Teilkörpern, jedoch nicht innerhalb des jeweiligen Teilkörpers. Insbesondere unterscheiden sich die Bleche der einzelnen Teilkörper lediglich aufgrund deren Orientierung. Infolgedessen können vergleichsweise viele Gleichteile herangezogen werden, was Herstellungskosten reduziert. Aufgrund der unterschiedlichen Anordnung der Bleche innerhalb der jeweiligen Teilkörper ist insbesondere eine mechanische Steifigkeit erhöht.

Beispielsweise weist jeder der Teilkörper insbesondere zwischen 1.000 Blechlagen und 2.000 Blechlagen und insbesondere im Wesentlichen gleich 1.500 Blechlagen auf, wobei beispielsweise jeweils eine Abweichung von bis zu 200 Blechlagen, 100 Blechlagen oder 0 Blechlagen vorhanden sind. Beispielsweise sind die einzelnen Blechlagen mittels Stanzpaketierung aneinander festgelegt. Besonders bevorzugt sind die einzelnen Bleche pro Teilkörper oder vollständig miteinander verbacken. Hierbei ist jedes der Bleche geeigneterweise mit einer Beschichtung versehen, welche mittels Erwärmung insbesondere zumindest teilweise verflüssigt wird. Infolgedessen erfolgt bei Erwärmung eine stoffschlüssige Verbindung der einzelnen Beschichtungen der Blechlagen miteinander, was eine Robustheit erhöht. Der Rotorkörper ist beispielweise im Wesentlichen mittels des bzw. der Teilkörper gebildet sowie etwaiger Verbindungsmittel, wie z.B. Gewindestangen.

Beispielsweise weist jede Tasche auf deren radialen äußeren Seite eine Öffnung auf. Die Öffnung ist insbesondere ein sich in axialer Richtung erstreckender Schlitz, und die Tasche ist somit radial außenseitig geöffnet. Zweckmäßigerweise reicht die Öffnung bis zu einer (Außen-)Oberfläche des Rotorkörpers. Somit ist die Tasche geöffnet ausgestaltet. Beispielsweise ist die Öffnung mit Luft oder einem Füllstoff befüllt, der insbesondere ein para- oder diamagnetisches Material ist. Insbesondere ist die Öffnung vergossen, beispielsweise mit Epoxidharz. Vorzugsweise ist an der Stirnseite des Rotorkörpers ein O-Ring angeordnet, mittels dessen die Öffnung in axialer Richtung begrenzt ist. Aufgrund des O-Rings ist ein Austritt des Vergusses bei Montage verringert. Auch ist eine Belastung des Vergusses bei Montage und Betrieb des Rotors aufgrund des O-Rings vermieden. Der O-Ring ist beispielsweise aus einem Kunststoff, insbesondere einen Gummi erstellt. Aufgrund der Öffnung werden die Magnetfeldlinien jedes Magneten weiter radial nach außen gedrängt, was zu einem weiter erhöhten Drehmoment führt.

Beispielsweise ist der Querschnitt der Öffnung trapezförmig, wobei der Querschnitt insbesondere senkrecht zur Achse ist. Mit anderen Worten ist die Öffnung konisch ausgestaltet. Hierbei sind die beiden zueinander parallelen Seiten vorzugsweise in tangentialer Richtung orientiert, und die radial weiter außen liegende Seite ist insbesondere in tangentialer Richtung verkürzt. Zum Beispiel ist das Trapez regelmäßig ausgestaltet und/oder symmetrisch zu der der Tasche zugeordneten radialen Geraden. Aufgrund einer derartigen Ausgestaltung ist ein Ablösen der Magnete aus der Tasche aufgrund von Zentrifugalkräften vermieden, sodass auch bei einer vergleichsweise großen Betriebsdauer oder einer Fehlfunktion eine Beschädigung weiterer Bestandteile der elektrischen Maschine vermieden ist.

Der Rotorkörper weist einen sich axial erstreckenden ersten Hohlzylinder und einen sich axial erstreckenden zweiten Hohlzylinder auf. Der zweite Hohlzylinder ist insbesondere konzentrisch zu dem ersten Hohlzylinder und/oder zu der Welle angeordnet. Der erste Hohlzylinder ist vorzugsweise konzentrisch zur Welle angeordnet und liegt beispielsweise an dieser an, insbesondere direkt. Geeigneterweise weist die Welle oder der erste Hohlzylinder eine in Axialrichtung verlaufende Nut auf, wobei der erste Hohlzylinder bzw. die Nut eine korrespondierende Feder aufweist. Mit anderen Worten ist zwischen dem ersten Hohlzylinder und der Welle eine Nut-Federverbindung erstellt, wobei die Nut bzw. Feder insbesondere in axialer Richtung verläuft. Aufgrund der Nut-Federverbindung ist eine Drehmomentübertragung zwischen dem Rotorkörper und der Welle verbessert. Alternativ weist sowohl die Welle als auch der erste Hohlzylinder jeweils die Nut auf, in die eine gemeinsame Feder eingelegt ist.

Der zweite Hohlzylinder umgibt den ersten Hohlzylinder und ist in radialer Richtung zwischen dem ersten Hohlzylinder und den Kammern angeordnet. Hierbei ist der erste Hohlzylinder von dem zweiten Hohlzylinder beabstandet, und beispielsweise bildet der zweite Hohlzylinder zumindest abschnittsweise den Boden der jeweiligen Kammern. Der erste Hohlzylinder und der zweite Hohlzylinder sind mittels Speichen miteinander verbunden, die zumindest teilweise radial verlaufen. Mit anderen Worten ist der zweite Hohlzylinder mittels der Speichen an den ersten Hohlzylinder angebunden, und die Speichen erstrecken sich insbesondere in Axialrichtung. Geeigneterweise sind die Speichen an dem ersten Hohlzylinder oder dem zweiten Hohlzylinder angeformt.

Bevorzugt ist die Ausdehnung der Speichen in axialer Richtung gleich der Ausdehnung des ersten Hohlzylinders in axialer Richtung und/oder des zweiten Hohlzylinders in axialer Richtung. Zusammenfassend ist der erste Hohlzylinder mittels der Speichen an den zweiten Hohlzylinder angebunden.

Beispielsweise weist der Rotorkörper zwischen 4 Speichen und 200 Speichen, zwischen 10 Speichen und 200 Speichen, zwischen 20 Speichen und 200 Speichen und beispielsweise zwischen 40 Speichen und 100 Speichen auf. Die Speichen sind insbesondere quaderförmig ausgestaltet. Vorzugsweise verlaufen die Speichen lediglich radial. Mit anderen Worten verläuft jede der Speichen auf einer zugeordneten radialen Geraden. Aufgrund der Speichen erfolgt eine Drehmomentübertragung zwischen dem ersten Hohlzylinder und dem zweiten Hohlzylinder. Beispielsweise sind an dem zweiten Hohlzylinder radial nach außen gerichtete Vorsprünge oder dergleichen angebunden, insbesondere angeformt, mittels derer beispielsweise die Begrenzungen der Kammern bzw. Taschen gebildet sind. Vorzugsweise sind zwischen dem ersten Hohlzylinder und dem zweiten Hohlzylinder mit Ausnahme der Streben im Wesentlichen keine weiteren Bauteile angeordnet. Zumindest jedoch sind aufgrund der beiden Hohlzylinder sowie der Streben in axialer Richtung verlaufende Öffnungen gebildet, die insbesondere mittels Luft befüllt sind. Infolgedessen ist ein Gewicht des Rotors und somit eine Trägheit verringert. Daher ist eine Dynamik der elektrischen Maschine erhöht. Alternativ sind die Kammern beispielsweise mittels eines para- oder diamagnetischen Materials befüllt.

Erfindungsgemäß verlaufen die Speichen sowohl in radialer als auch in tangentialer Richtung (Tangentialrichtung). Zum Beispiel sind die Speichen lediglich in tangentialer Richtung in eine einzige Richtung geneigt und verlaufen somit lediglich in einer einzigen tangentialen Richtung, also beispielsweise im oder gegen den Uhrzeigersinn. Infolgedessen ist eine Vorzugsrichtung gegeben, sodass der Rotor vergleichsweise sicher in eine Drehrichtung betrieben werden kann, wobei ein Gewicht und somit eine Trägheit vergleichsweise gering ist. Besonders bevorzugt jedoch sind ein Teil der Speichen in die eine tangentiale Richtung und die Verbleibenden in die andere tangentiale Richtung geneigt, wobei beispielsweise die gleiche Anzahl an Speichen in die eine als auch in die andere Richtung geneigt ist. Beispielsweise sind die einzelnen Speichen aneinander angebunden, insbesondere endseitig. Folglich sind die Speichen somit sonnenförmig zueinander angeordnet. Vorzugsweise sind die Speichen drehsymmetrisch bezüglich der Achse der Welle angeordnet. Alternativ oder in Kombination hierzu schneiden sich die Speichen beispielsweise in einem Bereich zwischen deren jeweiligem Ende in radialer Richtung, was eine mechanische Stabilität weiter erhöht.

Besonders bevorzugt weist der Rotorkörper einen dritten Hohlzylinder auf, der sich axial erstreckt und beispielsweise die gleiche Ausdehnung in axialer Richtung wie der erste und/oder zweite Hohlzylinder aufweist. Der dritte Hohlzylinder ist geeigneterweise konzentrisch zu dem ersten und/oder zweiten Hohlzylinder angeordnet. Zumindest jedoch ist der dritte Hohlzylinder zwischen dem ersten Hohlzylinder und dem zweiten Hohlzylinder angeordnet und von diesen beabstandet. Hierbei schneiden die Speichen den dritten Hohlzylinder, der folglich an den Speichen angebunden ist. Aufgrund des dritten Hohlzylinders ist es ermöglicht, zwischen dem ersten Hohlzylinder und dem zweiten Hohlzylinder in radialer Richtung einen vergleichsweise großen Abstand zu wählen. Mit anderen Worten ist es ermöglicht, eine vergleichsweise große Differenz zwischen den beiden Radien des ersten und des zweiten Hohlzylinders zu wählen. Folglich sind zwischen diesen beiden vergleichsweise großen Öffnungen gebildet, die mittels des dritten Hohlzylinders jedoch begrenzt sind. Infolgedessen ist ein Gewicht des Rotors weiter verringert, weswegen dieser eine verringerte Trägheit aufweist.

Vorzugsweise sind die Magneten baugleich, was zu verringerten Herstellungskosten führt. Besonders bevorzugt sind die Magneten quaderförmig ausgestaltet, was eine Positionierung innerhalb der jeweiligen Tasche erleichtert. Insbesondere ist die Ausdehnung in tangentialer Richtung zweckmäßigerweise zwischen 5 Millimetern und 20 Millimetern und beispielsweise gleich 10 Millimeter. Geeigneterweise ist eine der Kantenlängen der quaderförmigen Magneten zwischen 10 Millimetern und 40 Millimetern oder zwischen 15 Millimetern und 30 Millimetern. Geeigneterweise ist die Kantenlänge im Wesentlichen gleich 25 Millimeter. Aufgrund derartiger Abmessungen ist eine Montage erleichtert. Beispielsweise sind die Magneten aus einem Ferrit hergestellt, das beispielsweise gesintert ist. Geeigneterweise sind die Magneten Neodym-Magneten, insbesondere NdFeB-Magnete.

Beispielsweise weist der Rotor zwischen 40 Magneten und 80 Magneten und beispielsweise 60 Magnete auf. Sofern der Rotorkörper mehrere etwaige Teilkörper aufweist, weist insbesondere jeder der Teilkörper eine derartige Anzahl an Magneten auf. Alternativ hierzu ist jeder der Magneten in mehreren, insbesondere allen, der Teilkörper angeordnet. Aufgrund einer derartigen Anzahl an Magneten ist ein Drehmomentverlauf vergleichmäßigt.

Vorzugsweise umfasst der Rotor einen baugleichen zweiten Rotorkörper, der in axialer Richtung an den Rotorkörper gefügt ist. Der zweite Rotorkörper weist somit ebenfalls Magneten auf, die innerhalb von radial verlaufenden Taschen des zweiten Rotorkörpers angeordnet sind. Auch weist der zweite Rotorkörper ebenfalls die Kammern auf, die jeweils mittels eines axial verlaufenden Schlitzes mit einer der Taschen verbunden ist. Der zweite Rotorkörper ist in axialer Richtung an den Rotorkörper gefügt und insbesondere an diesem befestigt.

Die Taschen des Rotorkörpers und des zweiten Rotorkörpers sind in tangentialer Richtung zueinander versetzt. Mit anderen Worten fluchten die Taschen nicht miteinander. Beispielsweise ist ein Winkel zwischen 5 Grad und 10 Grad zwischen den jeweils nächsten Taschen gebildet. Infolgedessen ist ein Rastmoment des Rotors verringert. Beispielsweise sind die beiden Rotorkörper zueinander verdreht, sodass mittels Drehung des zweiten Rotorkörpers um die Welle die beiden Rotorkörper zueinander deckungsgleich sind. Besonders bevorzugt jedoch ist der zweiten Rotorkörper mittels einer Drehung um 180 Grad in einer radialer Richtung auf dem Rotorkörper abbildbar. Infolgedessen ist es ermöglicht, dass die beiden Rotorkörper beispielsweise mittels einer gemeinsamen Feder oder einer gemeinsamen Nut an der Welle angebunden sind, was eine Herstellung vereinfacht. Auch können zur Herstellung der beiden Rotorkörper viele Gleichteile verwendet werden, was Herstellungskosten reduziert. Beispielsweise weist der Rotor weitere Rotorkörper auf, insbesondere drei, vier oder fünf Rotorkörper oder mehr Rotorkörper. Sämtliche Rotorkörper sind zweckmäßigerweise in axialer Richtung aneinander gefügt. Beispielsweise sind die Taschen sämtlicher Rotorkörpers in tangentialer Richtung zueinander versetzt. Zumindest jedoch sind bevorzugt die Taschen von in axialer Richtung direkt zueinander benachbarten Rotorkörpern in tangentialer Richtung zueinander versetzt.

Die Erfindung betrifft fernen ein Verfahren zur Herstellung eines derartigen Rotors. Hierbei werden insbesondere zunächst die einzelne Bleche aus einem Blech gestanzt und in der axialen Richtung übereinander gestapelt. In einem weiteren Arbeitsschritt werden die einzelnen Bleche aneinander befestigt, insbesondere miteinander verbacken. In einem weiteren Arbeitsschritt werden die Magnete in die Taschen eingeführt. Hierbei sind die Magnete beispielsweise bereits magnetisiert. Alternativ hierzu erfolgt nach Einsetzen der Magneten in die Taschen deren Magnetisierung. In einem weiteren Arbeitsschritt erfolgt insbesondere ein Vergießen der Taschen und/oder der etwaigen Öffnungen mit dem para- oder diamagnetischen Füllstoff, also insbesondere Epoxidharz. Beispielsweise wird im Anschluss hieran das auf diese Weise erstellte Rotorpaket auf die Welle aufgesetzt und an dieser befestigt. Alternativ hierzu erfolgt das Aufsetzen der einzelnen Bleche auf die Welle bereits vor dem Verbacken.

Die elektrische Maschine ist beispielsweise ein Generator oder besonders bevorzugt ein Elektromotor, wie ein bürstenloser Elektromotor. Insbesondere ist die elektrische Maschine eine Synchronmaschine. Die elektrische Maschine weist beispielsweise eine Leistung zwischen 30 kW und 150 kW, zwischen 40 kW und 140 kW und beispielsweise zwischen 60 kW und 100 kW auf. Geeigneterweise ist die Nenndrehzahl oder maximale Drehzahl zwischen 200 1/min und 8000 1/min. Besonders bevorzugt ist das Drehmoment der elektrischen Maschine, welches beispielsweise ein Maximales- und/oder Nenndrehmoment ist, zwischen 100 Newtonmeter und 20.000 Newtonmeter. Die elektrische Maschine ist beispielsweise ein Bestandteil einer Servopresse, eines Schiffsantriebs oder einer Maschine zur Herstellung oder Verarbeitung von Kunststoff, wie einer Kunststoffspritzgussmaschine oder eines Extruders. Vorzugsweise umfasst die elektrische Maschine einen Umrichter, welcher insbesondere eine Brückenschaltung aufweist, wie eine B6-Schaltung. Hierbei ist die elektrische Maschine zweckmäßigerweise dreiphasig aufgebaut. Die elektrische Maschine weist einen Rotor und einen diesen umfangsseitig umgebenen Stator auf. Mit anderen Worten ist die elektrische Maschine ein Innenläufer. Der Stator weist zweckmäßigerweise eine Anzahl an Elektromagneten auf, die beispielsweise mittels des etwaigen Umrichters bestromt sind. Die Elektromagneten sind hierbei beispielsweise durch eine Dreiecks- oder Sternschaltung miteinander verschalten. Vorzugsweise ist die elektrische Maschine dreiphasig ausgestaltet. Der Elektromotor ist bevorzugt ein Torque-Motor mit einer integrierten Elektronik, und ein Umrichter ist insbesondere aufgesetzt, zweckmäßigerweise auf ein B-seitiges Lagerschild. Unter Torque-Motor wird insbesondere ein hochpoliger, elektrischer Direktantrieb aus der Gruppe der Langsamläufer verstanden. Zweckmäßigerweise weist der Torque-Motor mehr als 20, 40 oder 60 Pole auf.

Der Stator umgibt umfangsseitig einen Rotor, der eine Welle und einen die Welle umfangsseitig umgebenen Rotorkörper aufweist. Der Rotorkörper umfasst eine Anzahl an Magneten, wobei jeder der Magneten jeweils innerhalb einer radial verlaufenden Tasche des Rotorkörpers angeordnet ist, und wobei jede der Taschen mittels eines axial verlaufenden Schlitzes mit jeweils einer radial innen liegenden Kammer des Rotorkörpers verbunden ist. Die Welle ist beispielsweise aus einem Stahl hergestellt und insbesondere eine Vollwelle. Alternativ hierzu ist die Welle eine Hohlwelle, die vorzugsweise aus einem Stahl erstellt ist. Geeigneterweise umfasst die elektrische Maschine zumindest ein Lager, mittels dessen die Welle drehbar um eine Achse (der Welle) gelagert ist. Vorzugsweise umfasst die elektrische Maschine zwei Lager, welche sich auf gegenüberliegenden Seiten in axialer Richtung von dem Rotorköper befinden. Die Lager sind insbesondere Wälzlager, wie Kugel- oder Zylinderlager. Die Lager sind vorzugsweise an jeweils an einem Lagerschild angebunden, mittels welcher beispielsweise ein Gehäuse der elektrischen Maschine jeweils stirnseitig verschlossen ist. Insbesondere sind die Lagerschilde im Wesentlichen senkrecht zu der Achse der Welle (Rotationsachse) angeordnet.

Die im Zusammenhang mit dem Rotor ausgeführten Weiterbildungen und Vorteile sind sinngemäß auch auf die elektrische Maschine/die Herstellung des Rotors zu übertragen und umgekehrt.

Nachfolgend werden Ausführungsbeispiele der Erfindung anhand einer Zeichnung näher erläutert. Darin zeigen:

Fig. 1          schematisch in einer Schnittdarstellung

Fig. 2        schematisch vereinfacht den Rotor in einer Schnittdarstellung,

Fig. 3        perspektivisch einen Teilkörper eines Rotorkörpers,

Fig. 4        in einer Schnittdarstellung einen Ausschnitt des Rotorkörpers,

Fig. 5        perspektivisch einen weiteren Ausschnitt des Rotorkörpers,

Fig. 6, 7     schematisch und perspektivisch eine weitere Ausführungsform des Rotors mit zwei Rotorkörpern,

Fig. 8-12     jeweils in einer Draufsicht unterschiedliche Ausführungsformen des Rotorkörpers,

Fig. 13, 14   ausschnittsweise und in einer Draufsicht eine weitere Ausführungsform des Rotorkörpers,

Fig. 15, 16   ausschnittsweise und in einer Draufsicht eine weitere Ausführungsform des Rotorkörpers, und

Fig. 17, 18   ausschnittsweise und in einer Draufsicht eine letzte Ausführungsform des Rotorkörpers,

Einander entsprechende Teile sind in allen Figuren mit den gleichen Bezugszeichen versehen.

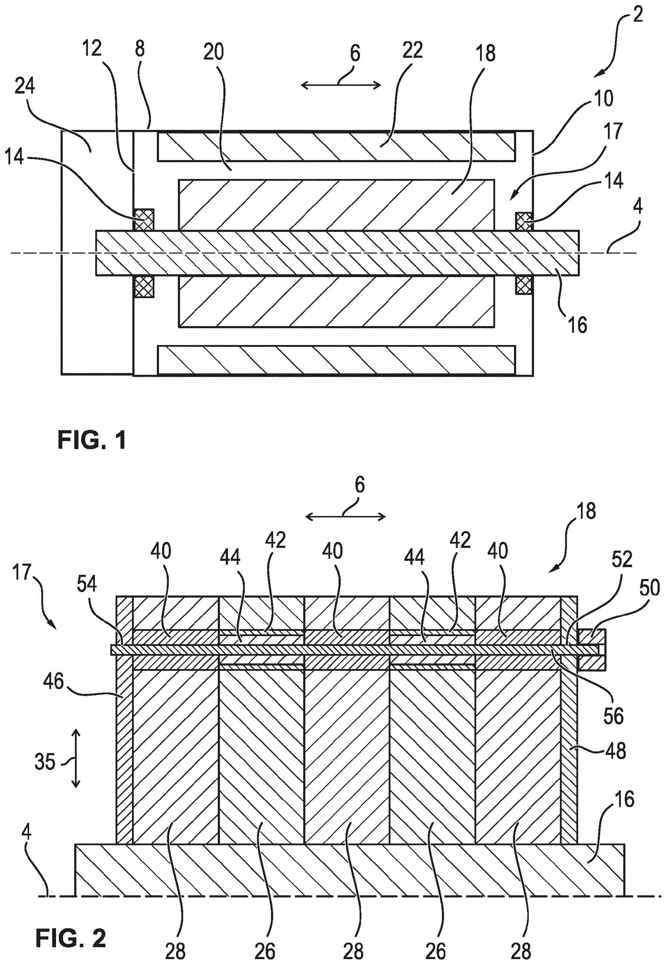

In Figur 1 ist schematisch vereinfacht eine elektrische Maschine 2 in Form eines bürstenlosen Elektromotors in eine Schnittdarstellung entlang einer Rotationsachse 4 gezeigt, die parallel zu einer axialen Richtung 6 ist. Die elektrische Maschine 2 weist ein hohlzylindrisches Gehäuse 8 auf, welches sich in axialer Richtung 6 erstreckt, und stirnseitig mittels eines A-seitigen Lagerschilds 10 und eines B-seitigen Lagerschilds 12 verschlossen ist. An den beiden Lagerschilden 10, 12 ist jeweils ein Kugellager 14 befestigt, mittels dessen eine Welle 16 eines Rotors 17 drehbar um die Rotationsachse 4 gelagert ist. Hierbei ist die Welle 16 als Vollzylinder ausgestaltet, der konzentrisch zur Rotationsachse 4 angeordnet und aus einem Stahl, wie Edelstahl oder einem anderen Stahl, gefertigt ist. An der Welle 16 ist ein Rotorkörper 18 befestigt, der die Welle 16 umfangsseitig umgibt, und der zwischen den beiden Kugellagern 14 angeordnet ist. Hierbei liegt der Rotorkörper 18 mechanisch direkt an der Welle 16 an. Der Rotorkörper 18 ist umfangsseitig unter Außenbildung eines Luftspalts 20 von einem Stator 22 umgeben, welcher an der Innenseite des Gehäuses 8 befestigt ist.

Der Stator 22 weist eine Anzahl an nicht näher dargestellten Elektromagneten in Form von elektrischen Spulen auf, die mittels eines Umrichters 24 bei Betrieb bestromt werden, welcher stirnseitig auf der dem Rotor 17 gegenüberliegenden Seite des B-seitigen Lagerschilds 12 angebunden ist. Der Stator 22 weist insgesamt sechsunddreißig Spulengruppen mit jeweils zwei elektrischen Spulen auf. Die Bestromung der Elektromagneten erfolgt in Abhängigkeit der aktuellen Stellung des Rotors 17 bezüglich des Stator 22, was mittels eines nicht näher dargestellten Drehgebers ermittelt wird, welche an der Welle 16 und dem Umrichter 24 oder dem B-seitigen Lagerschild 12 angebunden ist. An dem Bereich der Welle 16, welcher durch das A-seitige Lagerschild 10 hindurch reicht, ist im Montagezustand ein weiterer Bestandteil einer Presse angebunden, sodass mittels Bestromung des Stators 22 die Presse bewegt wird. Hierbei wird mittels des Elektromotors 2 ein Drehmoment von 17.500 Newtonmetern (Nm) bereitgestellt. Der Elektromotor 2 ist bevorzugt ein Torque-Motor mit integrierter Elektronik, und der Umrichter 24 ist insbesondere aufgesetzt, zweckmäßigerweise auf das B-seitige Lagerschild 12.

In Fig. 2 ist in einer Schnittdarstellung ausschnittsweise schematisch vereinfacht der Rotor 17 mit der Welle 16 und dem Rotorkörper 18 gezeigt. Der Rotorkörper 18 weist eine zweite Anzahl an ersten Teilkörpern 26 auf, wobei die zweite Anzahl gleich 2 ist. Ferner weist der Rotorkörper 18 eine dritte Anzahl an zweiten Teilkörpern 28 auf, wobei die dritte Anzahl gleich 3 ist. Die ersten Teilkörper 26 und die zweiten Teilkörper 28 sind in axialer Richtung 6 abwechselnd angeordnet, sodass die beiden ersten Teilkörper 26 in axialer Richtung 6 von jeweils einem der zweiten Teilkörper 28 umgeben sind. Die Teilkörper 26, 28 sind auf die Welle 16 aufgesetzt und bilden im Wesentlichen den Rotorkörper 18. Jeder der Teilkörper 26, 28 ist jeweils ein Blechpaket mit hier nicht näher dargestellten Blechen, die in axialer Richtung 6 aufeinander gestapelt sind.

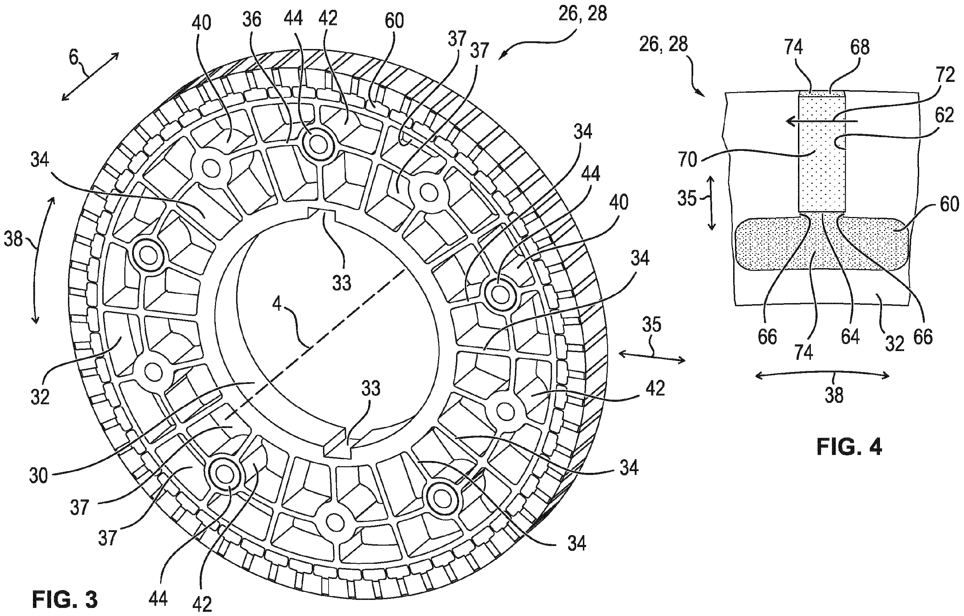

Die Teilkörper 26, 28 sind baugleich, und in Fig. 3 ist eines dieser Teilkörper 26, 28 perspektivisch gezeigt. So weist jeder Teilkörper 26, 28 einen sich in axialer Richtung 6 erstreckenden ersten Hohlzylinder 30 und einen diesen umfangsseitig umgebenen und sich axial erstreckenden zweiten Hohlzylinder 32 auf. Der erste Hohlzylinder 30 weist auf der dem zweiten Hohlzylinder 32 abgewandten Oberfläche zwei sich in axialer Richtung 6 erstreckende Nuten 33 auf, die zueinander bezüglich der Rotationsachse 4 um 180° versetzt sind. Innerhalb der Nuten 33 ist im Montagezustand eine Passfeder eingesetzt, die ebenfalls in einer weiteren Nut der Welle 16 positioniert ist. Im Montagezustand umgibt der erste Hohlzylinder 30 die Welle 16 umfangsseitig und liegt an dieser mechanisch direkt an.

Der erste Hohlzylinder 30 und der zweite Hohlzylinder 32 sind mittels radial verlaufender Speichen 34 miteinander verbunden. Mit anderen Worten verläuft jede der Speichen in einer radialen Richtung 35, wobei die radiale Richtung 35 mittels der Rotationsachse 4 definiert ist. Die beiden Hohlzylindern 30, 32 sowie die Speichen 34 werden hierbei mittels jedes Blechs des jeweiligen Teilkörpers 26, 28 gebildet. Der zweite Hohlzylinder 32 ist konzentrisch zu dem ersten Hohlzylinder 30 und der Rotationsachse 4 angeordnet.

Ferner ist zwischen dem ersten Hohlzylinder 30 und dem zweiten Hohlzylinder 32 ein sich axial erstreckender dritter Hohlzylinder 36 angeordnet, der konzentrisch zur Rotationsachse 4 und sowohl von dem ersten Hohlzylinder 30 als auch von dem zweiten Hohlzylinder 32 beabstandet ist. Der dritte Hohlzylinder 36 wird von den Speichen 34 geschnitten, sodass zwischen den Hohlzylindern 30, 32, 36 und den Speichen mehrere Öffnungen 37 gebildet sind. Daher ist ein Gewicht des Rotorkörpers 18 vergleichsweise gering. An jedem zweiten Schnittpunkt des dritten Hohlzylinders 36 mit einer der insgesamt zwanzig Speichen 34 in tangentialer Richtung 38 ist entweder eine Lasche 40 oder eine Öse 42 positioniert. Folglich weist jeder Teilkörper 26, 28 insgesamt fünf Laschen 40 und fünf Ösen 42 auf. Jede Lasche 40 ist ein Hohlzylinder, der sich in axialer Richtung 6 erstreckt. Auch jede Öse 42 ist ein Hohlzylinder, der sich in axialer Richtung 6 erstreckt, wobei der Außendurchmesser der Ösen 42 gleich dem Außendurchmesser der Laschen 40 ist. Der Innendurchmesser der Laschen 40 ist jedoch im Vergleich zum Innendurchmesser der Ösen 42 verringert. Die Laschen 40 und die Ösen 42 weisen den gleichen Abstand zur Rotationsachse 4 auf.

Innerhalb jeder der Ösen 42 ist jeweils eine Buchse 44 eingepresst, sodass die jeweilige Buchse 44 mit der jeweiligen Öse 42 verpresst ist. Jede Buchse 44 ist ein Hohlzylinder, der aus einem Kunststoff, nämlich Polytetrafluorethylen (PTFE) gefertigt ist, und der sich in axialer Richtung 6 erstreckt. Der Außendurchmesser der gleichartigen Buchsen 44 ist geringfügig größer als der Innendurchmesser der Öse 42, sodass bei Montage zwischen diesen ein Kraftschluss erstellt ist.

Zusammenfassend weist der erste Teilkörper 26 eine erste Anzahl von Ösen 42 auf, innerhalb derer jeweils eine der Buchsen 44 angeordnet ist, wobei die erste Anzahl gleich 5 ist. Der zweite Teilkörper 28 weist ebenfalls fünf derartige Ösen 42 auf, innerhalb derer jeweils eine der Buchsen 44 angeordnet ist. Auch weist der zweite Teilkörper 28 die erste Anzahl an Laschen 40 auf, und auch der erste Teilkörper weist die erste Anzahl an Laschen 40 auf, nämlich fünf.

Der Rotorkörper 18 ist auf Seiten des A-seitigen Lagerschilds 10 mittels einer ersten Abdeckung 46 und auf Seiten des B-seitigen Lageschilds 12 mittels einer zweiten Abdeckung 48 abgedeckt, die somit den Rotorkörper 18 in axialer Richtung 6 umgeben und umfangsseitig mit diesem fluchten. Die beiden Abdeckungen 46, 48 sind ringförmige aus einem Edelstahl erstellte Scheiben und ebenfalls auf die Welle 16 aufgesetzt. Die beiden Abdeckungen 46, 48 liegen mechanisch direkt an der Welle 16 und den jeweils Äußersten der zweiten Teilkörpern 28 und somit mechanisch direkt an dem Rotorkörper 18 an. Die zweite Abdeckung 48 weist insgesamt zehn Muttern 50 auf, die sich auf der dem Rotorkörper 18 gegenüberliegenden Seite befinden, und die zur Rotationsachse 4 den gleichen Abstand aufweisen wie die Laschen 40 und die Ösen 42.

Ferner sind in die zweite Abdeckung 48 jeweils Löcher 52 eingebracht, die mit einer zentralen Ausnahme der Mutter 50 jeweils fluchten. Korrespondierend zu den Löchern 52 weist die erste Abdeckung 46 insgesamt zehn Bohrungen 54 auf, die drehsymmetrisch bezüglich der Rotationsachse 4 angeordnet sind und jeweils ein Innengewinde aufweisen.

Ferner weist der Rotor 17 fünf Achsen 56 in Form von Gewindestangen auf. Die Achsen 56 sind in axialer Richtung 6 angeordnet, und jede der Laschen 40 des zweiten Teilkörpers 28 ist eine der Achsen 56 zugeordnet und nimmt diese auf. Auch ist jeweils einer der dem ersten Teilkörper 26 zugeordneten Buchsen 44 jeweils eine der Achsen 56 zugeordnet, und jede der Buchsen 44 nimmt jeweils die zugeordnete Achse 56 auf. Infolgedessen erstreckt sich jede der Achsen 56 durch drei Laschen 40 sowie zwei der Buchsen 44. Der Innendurchmesser der Laschen 40 ist geringfügig größer als der Außendurchmesser der fünf baugleichen Achse 56, sodass zwischen diesen sich ein Spiel einstellt. Zwischen jeder der den Achsen 56 zugeordneten Buchsen 44 ist eine Spielpassung erstellt.

Zur Montage werden zunächst die einzelnen Teilkörper 26, 28 geeignet positioniert und im Anschluss hieran die Gewindestange 56 durch die Laschen 40 sowie die Buchsen 44 eingeführt. Hierbei sind die Achsen 56 zwischen dem ersten Hohlzylinder 30 und dem zweiten Hohlzylinder 32 angeordnet. Somit sind die Achsen 56 auch bezüglich der Welle 16 in radialer Richtung 35 nach außen versetzt. Die Achsen 56 werden in jeweils eine der Muttern 50 der zweiten Abdeckung 58 und eine der Bohrungen 54 der ersten Abdeckung 46 eingedreht, sodass mittels dieser auf die beiden Abdeckungen 46, 48 eine Kraft in axialer Richtung 6 aufeinander zu ausgeübt wird. Infolgedessen werden auch die einzelnen Teilkörper 26, 28 aufeinander gepresst und sind folglich aneinander gefügt, wobei aufgrund der Achsen 56 eine Bewegung der Teilkörper 26, 28 zueinander unterbunden ist.

Ferner weist der Rotor 17 fünf zweite Achsen 58 auf, wobei jede zweite Achse 58 jeweils von den Laschen 40 der ersten Teilkörper 26 und den dem zweiten Teilkörper 28 zugeordneten Buchsen 44 aufgenommen ist. Auch die zweiten Achsen 58 sind jeweils in eine der Muttern 50 und eine der Bohrungen 54 eingedreht, sodass ebenfalls mittels der fünf zweiten Achsen 58 die beiden Abdeckungen 46, 48 in axialer Richtung 6 aufeinander zu gepresst sind.

In Fig. 4 ist der Rotorkörper 18 ausschnittsweise gezeigt. Dieser weist sich radial an den zweiten Hohlzylinder 32 nach außen anschließende Kammern 60 auf, die in den ersten sowie zweiten Teilkörper 26, 28 eingebracht sind. Hierbei bildet der zweite Hohlzylinder 32 den radial innenliegenden Boden der Kammern 60, die jeweils einen rechteckförmigen Querschnitt mit abgerundeten Ecken bezüglich der Rotationsachse 4 aufweisen. Hierbei verläuft die Hauptausdehnung des rechteckförmigen Querschnitts in tangentialer Richtung 38.

Die Kammern 60 sind voneinander mechanisch getrennt und somit nicht verbunden. Es sind insgesamt sechzig derartige Kammern 60 vorhanden, die drehsymmetrisch bezüglich der Rotationsachse 4 angeordnet sind. Zudem weist jeder der Teilkörper 26, 28 bezüglich jeder der Kammern 60 eine radial nach außen versetzte Tasche 62 auf, die in radialer Richtung 35 verläuft und einen rechteckförmigen Querschnitt aufweist. Die Hauptausdehnung des rechteckförmigen Querschnitts verläuft in radialer Richtung 35. Somit umfasst jeder der Teilkörper 26, 28 genauso viele Taschen 62 wie Kammern 60. Die Taschen 62 sind voneinander getrennt und mechanisch nicht verbunden.

Jede Tasche 62 selbst erstreckt sich in axialer Richtung 6 und reicht durch den jeweiligen Teilkörper 26, 28 vollständig hindurch. Jede Tasche 62 ist mittels eines axial verlaufenden Schlitzes 64 mit der zugeordneten, radial innenliegenden Kammer 60 verbunden, wobei die Ausdehnung des Schlitzes 64 in tangentialer Richtung 38 im Vergleich zur Ausdehnung der Tasche 62 mittels zweier in tangentialer Richtung 38 gerichteter Vorsprünge 66 verringert ist. Die Ausdehnung der Kammer 60 in tangentialer Richtung 38 ist größer als die Ausdehnung der zugeordneten Tasche 62 in tangentialer Richtung 38. Mit anderen Worten steht die Kammer 60 in tangentialer Richtung 38 bezüglich der jeweils zugeordneten Tasche 62 in tangentialer Richtung 38 beidseitig über.

An jede Tasche 62 schließt sich auf der radialen Außenseite 35 eine Öffnung 68 an, mittels derer jede Tasche 62 geöffnet ist. Jede Öffnung 68 weist einen trapezförmigen Querschnitt senkrecht zur Rotationsachse 4 auf, sodass die in radialer Richtung 35 außenliegenden Bereiche aufeinander zu versetzt sind. Innerhalb jeder Tasche 62 ist jeweils ein in radialer Richtung 35 angeordneter quaderförmiger Magnet 70 angeordnet, der ein Permanentmagnet ist. Die Magnete 70 bestehen aus NdFeB. In einer nicht gezeigten Alternative sind die Magnete 70 aus einem Ferrit gesintert. Jeder der Teilkörper 26, 28 weist insgesamt sechzig Magnete 70 auf, und die elektrische Maschine 2 weist somit aufgrund der insgesamt fünf Teilkörper 26, 28 insgesamt dreihundert derartige Magnete 70 auf.

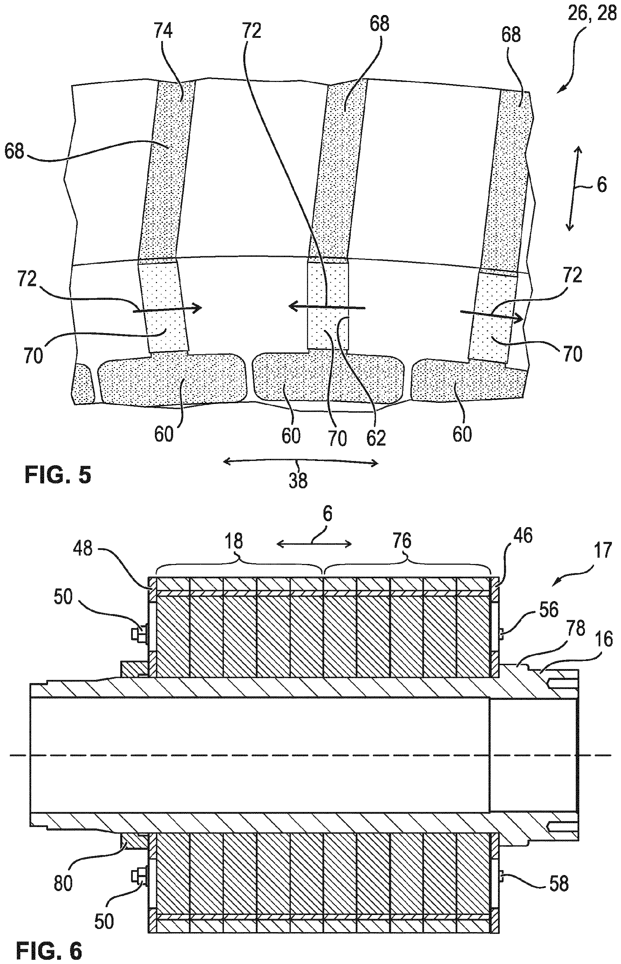

Zwischen jeder Tasche 62 und dem zugeordneten Magneten 70 ist eine Spielpassung erstellt, und jeder der Magnete 70 ist mit einer Beschichtung aus einem Epoxidharz versehen. Zudem weist jeder der Magnete 70 eine Magnetisierungsrichtung 72 auf, die parallel zur tangentialen Richtung 38 ist. Mit anderen Worten sind die Magnete 70 in tangentialer Richtung 38 magnetisiert. Zusammenfassend weist jeder Teilkörper 26, 28 die sechzig Magneten 70 auf, die in tangentialer Richtung 38 magnetisiert sind. Hierbei ist die Magnetisierungsrichtung 72 jeweils in tangentialer Richtung 38 direkt benachbarter Magneten 70 entgegengesetzt, sodass zwischen jeweils benachbarten Magneten 70 die Pole des Rotors 18 gebildet sind, wie in Fig. 5 gezeigt. Zudem sind die Kammern 60 in Tangentialrichtung 38 zueinander beabstandet und folglich nicht verbunden.

Jede der Kammern 60 sowie jede der Öffnungen 68 ist mit einem para- oder diamagnetischen Füllstoff 74 in Form eines Vergusses befüllt. Der Füllstoff 74 ist ein Epoxidharz, welches nach Anbringung der Teilkörper 26, 28 an der Welle 16 in diese eingefüllt und dort ausgehärtet wird. In einer weiteren Alternative ist der Füllstoff 74 Luft.

Aufgrund der Kammern 60 und des Füllstoffs 74 werden die mittels jedes Magneten 70 bereitgestellte Feldlinien in radialer Richtung 35 nach außen gedrängt, sodass diese zwischen den jeweils benachbarten Öffnungen 68 in den Luftspalt 20 austreten. Ein Ausbreiten der Magnetfeldlinien in radialer Richtung 35 nach innen auf die Welle 16 zu ist hingegen verhindert oder zumindest verringert. Dabei ist aufgrund des Füllstoffs 74 sowie der zwischen den einzelnen Kammern 60 verlaufenden Stege dennoch eine mechanische Integrität der einzelnen Teilkörper 26, 28 und somit des Rotorkörpers 18 gegeben. Der Füllstoff 74 weist insbesondere eine ideale relative Permeabilität von 1 auf, weswegen der magnetische Fluss eines Pols vom Magneten 70 über den Luftspalt 20 in den Stator 22 fließt.

Die Teilkörper 26, 28 sind im Montagezustand des Rotorkörpers 17 derart in Axialrichtung 6 aneinander gefügt, dass die Kammern 60 und die Taschen 62 benachbarter Teilkörper 26, 28 in axialer Richtung 6 fluchten. Hierbei sind jedem der Teilkörper 26, 28 jeweils sechzig Magneten zugeordnet, weswegen der Rotorkörper 18 insgesamt dreihundert Magnete 70 aufweist. In einer Alternative sind lediglich sechzig Magnete 70 vorhanden, wobei die Länge jedes Magneten 70 in axialer Richtung 6 der Länge der fünf Teilkörper 26, 28 entspricht. Hierbei ragt jeder der Magnete 70 durch sämtliche Teilkörper 26, 28 des Rotorkörpers 18 hindurch und ist folglich in insgesamt fünf der insgesamt dreihundert Taschen 62 angeordnet.

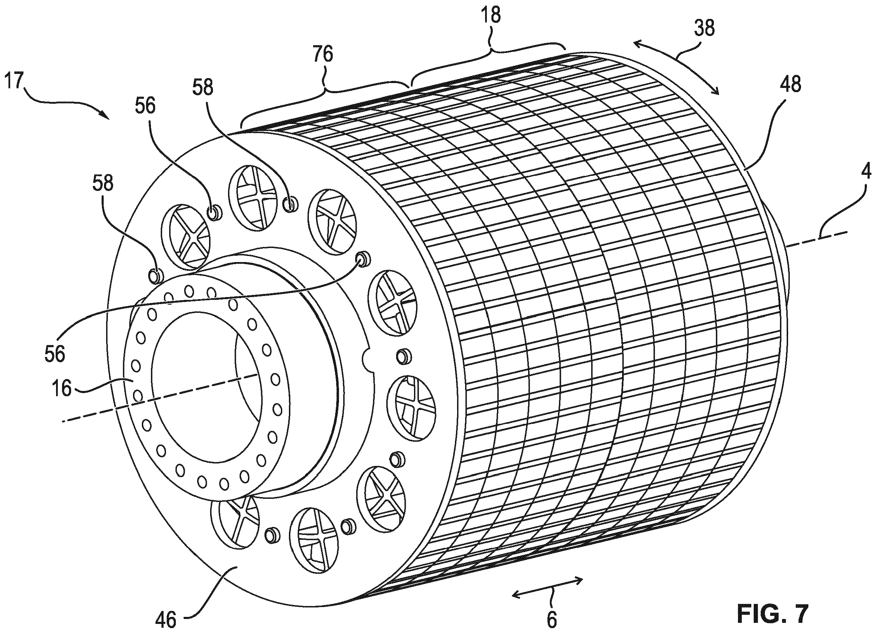

In Fig. 6 und 7 ist eine weitere Ausgestaltungsform des Rotors 17 dargestellt. Hierbei weist der Rotor 17 den in den vorherigen Figuren gezeigten Rotorkörper 18 und einen baugleichen zweiten Rotorkörper 76 auf, die in axialer Richtung 6 zueinander benachbart zwischen den beiden Abdeckungen 48, 46 angeordnet sind. Die Welle 16 ist als eine Hohlwelle ausgestaltet, und die beiden Rotorkörper 18, 76 sind auf die Welle 16 aufgesteckt. Zur Montage wird zunächst die erste Abdeckung 46 auf die Welle 16 aufgesteckt, bis diese an einer Schulter 78 anliegt. Im Anschluss hieran wird der zweite Rotorkörper 76, der Rotorkörper 18 und die zweite Abdeckung 48 auf die Welle 16 aufgesetzt. Im Anschluss hieran werden die Achsen 56, 58 durch die Rotorkörper 18, 76 und deren jeweilige Teilkörper 26, 28 gesteckt und mittels der Muttern 50 und der Bohrungen 54 befestigt. Infolgedessen werden die Abdeckungen 46, 48 und somit die Rotorkörper 18, 76 und daher auch die Teilkörper 26, 28 in axialer Richtung 6 aufeinander zu gepresst. Im Anschluss hieran wird auf die Welle 16 eine Manschette 80 aufgesetzt und mit der Welle 16 verschweißt. Infolgedessen ist ein Ablösen der Rotorkörper 18, 76 oder der Abdeckungen 46, 48 von der Welle 16 unterbunden.

Zusammenfassend sind die beiden Rotorkörper 18, 76 in axialer Richtung 6 aneinander gefügt. Der zweite Rotorkörper 76 ist bezüglich des Rotorkörpers 18 derart angeordnet, dass die Taschen 62 des Rotorkörpers 18 und des zweiten Rotorkörpers 76 in tangentialer Richtung 38 zueinander versetzt sind. Hierbei beträgt der Versatz 0,5°. Infolgedessen fluchten die Magneten 70 der beiden Rotorkörper 18, 76 nicht miteinander, weswegen ein Drehmomentverlauf der elektrischen Maschine 2 verringert und zumindest teilweise aufgehoben ist. Der zweite Rotorkörper 76 entspricht dem Rotorkörper 18, der um 180° bezüglich einer radial verlaufenden Achse gedreht ist. Die elektrische Maschine 2 weist zwei Federn auf, die innerhalb jeweils einer der Nuten 33 der beiden Rotorkörper 18, 76 angeordnet sind, die bezüglich der Rotationsachse 4 spiegelsymmetrisch sind. Die Schrägung des Rotors 17 wird somit insbesondere nicht durch den Versatz der Nuten 33 und der Federn erreicht, sondern durch den Versatz der Taschen um 0,25° zur Mittelebene der Nuten 33. Der Außenbereich mit den Magneten 70 ist somit um diesen Winkel zu einem Innenbereich des Rotors 17 verdreht. Durch das Umschichten der beiden Rotorkörper 17, 76 um 180° um die radial verlaufende Achse ergibt sich ein Versatz (=Schrägung des Rotors) von 0,25°+0,25°=0,5°.

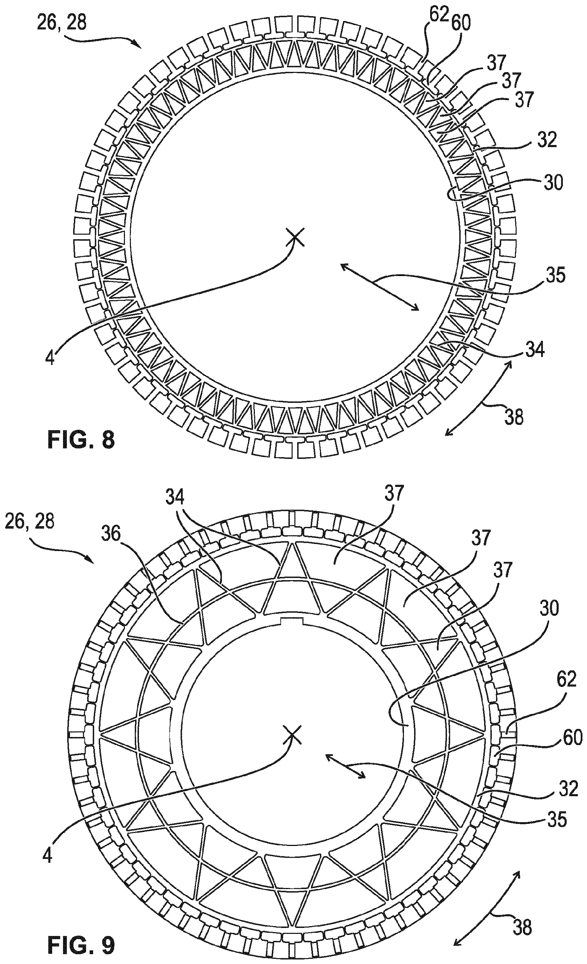

In Fig. 8 ist eine Abwandlung der Teilkörper 26, 28 dargestellt. Die Kammern 60 und die Taschen 62 sind unverändert. Jedoch ist der dritte Hohlzylinder 36 weggelassen, sodass die Teilkörper 26, 28 lediglich den ersten Hohlzylinder 30 und den zweiten Hohlzylinder 32 aufweisen, zwischen denen sich die Speichen 34 in radialer Richtung 35 befinden. Die Speichen 34 verlaufen sowohl in radialer als auch tangentialer Richtung 35, 38, wobei jeweils eines der Freienden von jeweils benachbarten Speichen 34 aneinander angebunden ist, sodass sich eine sonnenartige Anordnung der Speichen 34 ergibt. Auch ist der erste Hohlzylinder 30 in radialer Richtung 35 im Vergleich zu vorherigen Ausführungsformen weiter nach außen versetzt. Infolgedessen ist die Form der Öffnungen 37 im Vergleich zu den vorherigen Ausführungsformen abgeändert.

In Fig. 9 ist eine weitere Ausgestaltungsform der Teilkörper 26, 28 dargestellt, wobei wiederum die Kammern 60 und die Taschen 62 unverändert belassen sind. Auch bildet wiederum der zweite Hohlzylinder 32 den radial innenliegenden Boden der Kammern 60. Der erste Hohlzylinder 30 ist in radialer Richtung 35 nach innen versetzt und weist im Wesentlichen den gleichen Innendurchmesser wie bei der in Fig. 3 gezeigten Variante auf. Auch ist der dritte Hohlzylinder 36 vorhanden, der in radialer Richtung 35 zwischen dem ersten Hohlzylinder 30 und dem zweiten Hohlzylinder 32 positioniert ist. Die Anzahl der Speichen 34 ist im Vergleich zur vorherigen Ausführungsform verringert, wobei deren Verlauf wiederum ebenfalls in radialer Richtung 35 und tangentialer Richtung 38 ist, und wobei jeweils die Freienden benachbarter Speichen 34 aneinander angebunden sind. Die Speichen 34 schneiden jeweils den dritten Hohlzylinder 36.

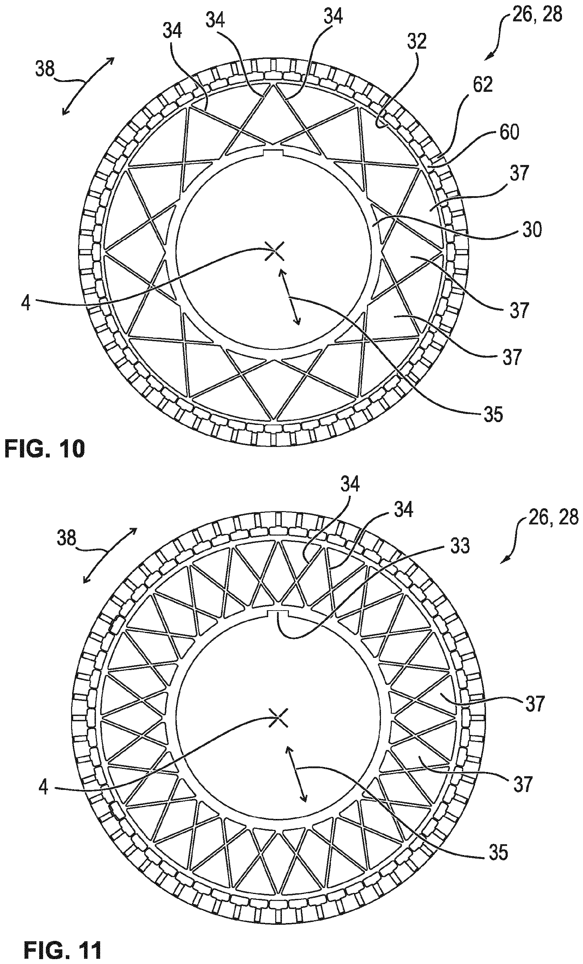

In Fig. 10 ist eine weitere Ausgestaltungsform der Teilkörper 26, 28 gezeigt, wobei wiederum die Taschen 62 und die Kammern 60 sowie der zweite Hohlzylinder 32 unverändert belassen sind. Der erste Hohlzylinder 30 entspricht der in Fig. 9 gezeigten Variante, wobei im Vergleich hierzu der dritte Hohlzylinder 36 weggelassen ist. Auch sind die Speichen 34 verlängert und weisen einen ausgeprägteren Verlauf in tangentialer Richtung 38 auf, sodass sich benachbarte Speichen 34 zwischen deren Freienden schneiden. Hierbei sind jeweils die Freienden der übernächsten Speichen 34 aneinander angebunden. Aufgrund des Schneidens sind die Speichen 34 zueinander stabilisiert.

In Fig. 11 ist eine weitere Ausgestaltungsform der Teilkörper 26, 28 gezeigt. Im Vergleich zur vorherigen Ausgestaltungsform ist lediglich die Anzahl der Speichen 34 sowie deren Länge verändert. So entspricht die Länge im Wesentlichen der Länge der in Fig. 9 gezeigten Speichen 34, wobei im Vergleich hierzu jedoch die Anzahl der Speichen 34 verdoppelt und der dritte Hohlzylinder 36 weggelassen ist. Jeweils zwei Speichen 34 schneiden sich jeweils, und jeweils eines der Freienden jeder Speiche 34 ist an einem der Freienden der jeweils übernächsten Speiche 34 in tangentialer Richtung 38 angebunden. Daher sind die Öffnungen 37 im Vergleich zur vorher gezeigten Ausführungsform verringert.

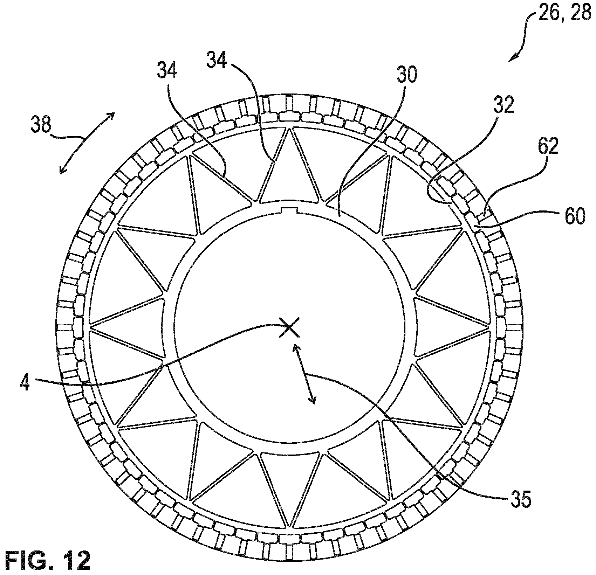

In Fig. 12 ist eine weitere Ausgestaltungsform der baugleichen Teilkörper 26, 28 gezeigt. Diese Ausführungsform entspricht der in Fig. 9 dargestellten Variante, wobei der dritte Hohlzylinder 36 weggelassen ist. So sind die Speichen 34, der erste und der zweite Hohlzylinder 30,32 sowie die Kammern 60 und die Taschen 62 unverändert belassen.

Bei den in Fig. 8 bis Fig. 12 gezeigten Varianten sind die Laschen 40 sowie die Buchsen 44 nicht gezeigt. Jedoch sind diese an einem Teil der Speichen 34 entsprechend der in Fig. 3 gezeigten Anordnung angebunden. Infolgedessen sind auch diese Teilkörper 26, 28 mittels der Achsen 56 und der zweiten Achsen 58 in axialer Richtung 6 aneinander gefügt. In weiteren, alternativen Ausführungsformen sind die Laschen 40 und/oder die Ösen 42 weggelassen.

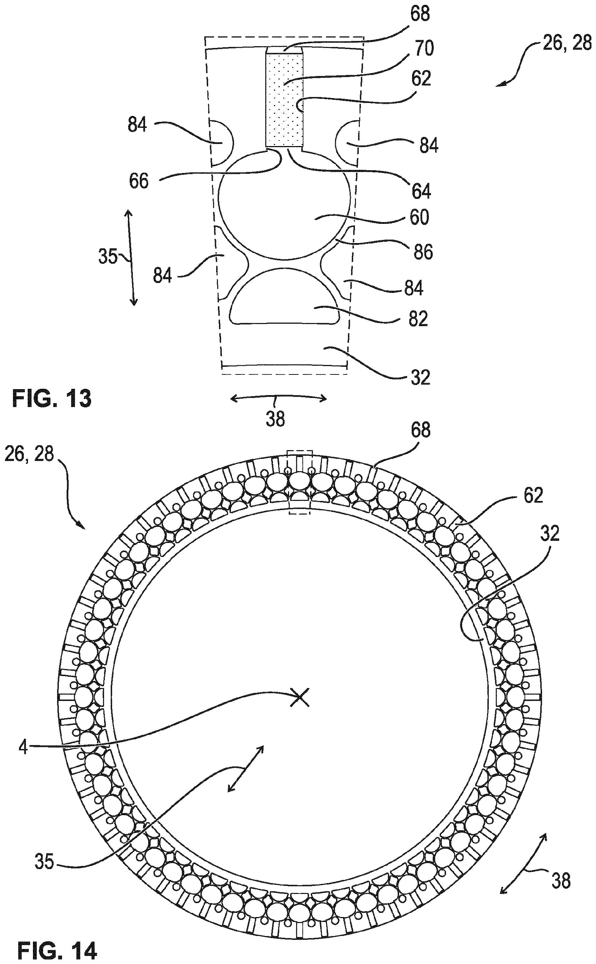

In Fig. 13 ist gemäß der Darstellung der Fig. 4 ein Ausschnitt einer weiteren Ausgestaltungsform der beiden Teilkörper 26, 28 und in Fig. 14 ein größerer Ausschnitt davon gezeigt, wobei Fig. 13 den in Fig. 14 mittels einer strichpunktierten Linie angedeuteten Ausschnitt zeigt. Die Taschen 62 sowie die Magneten 70 und die Öffnungen 68, mittels derer die Taschen 62 radial außen geöffnet sind, sind unverändert belassen. Auch der Schlitz 64 und die Vorsprünge 66 sind unverändert belassen.

Die Kammer 60 ist abgeändert und weist einen gerundeten Querschnitt auf. So ist keine der Kanten des Querschnitts gerade, wobei die Rundung jedoch variiert. Auch sind die Kammer 60 bezüglich des zweiten Hohlzylinders 32 radial nach außen versetzt, und zwischen jeder der Kammern 60 und dem zweiten Hohlzylinder 32 ist in radialer Richtung 35 eine erste Öffnung 82 gebildet, deren Querschnitt im Wesentlichen halbkreisförmig ausgestaltet ist, und deren gerader Boden mittels des zweiten Hohlzylinders 32 gebildet ist. Ferner weisen die Teilkörper 26, 28 weitere Öffnungen 84 auf, die sich in tangentialer Richtung 38 entweder zwischen benachbarten Kammern 60 und benachbarten ersten Öffnungen 82 oder zwischen benachbarten Kammern 60 und benachbarten Taschen 62 befinden. Hierbei ist der Querschnitt eines Teils der weiteren Öffnungen 84 kreisförmig und ein weiterer Anteil rautenförmig. Die erste Öffnung 82, die weiteren Öffnungen 84 sowie die Kammer 60 sind mittels Stegen 86 voneinander getrennt, weswegen eine mechanische Integrität der Teilkörper 26, 28 weiter vorhanden ist. Aufgrund der weiteren Öffnungen 84 ist ein Eindringen der mittels der Magnete 70 bereitgestellten Magnetfeldlinien radial nach innen weiter vermindert. Auf der radialen Innenseite des zweiten Hohlzylinders 32 schließen sich beispielsweise die Streben 34, der erste Hohlzylinder 30 sowie gegebenenfalls der dritte Hohlzylinder 36 entsprechend der in Fig. 3 bis 12 gezeigten Varianten an. Der magnetische Fluss des gegenüberliegenden Pols ist jeweils aufgrund des Hohlzylinders 32 und der Stege 86 minimiert. In Abhängigkeit der mechanischen Auslegung der Stege 86 wird die mechanische Leistung beeinflusst. Mittels des Füllstoffs 74 wird die mechanische Festigkeit erhöht und die Stege 86 stabilisiert.

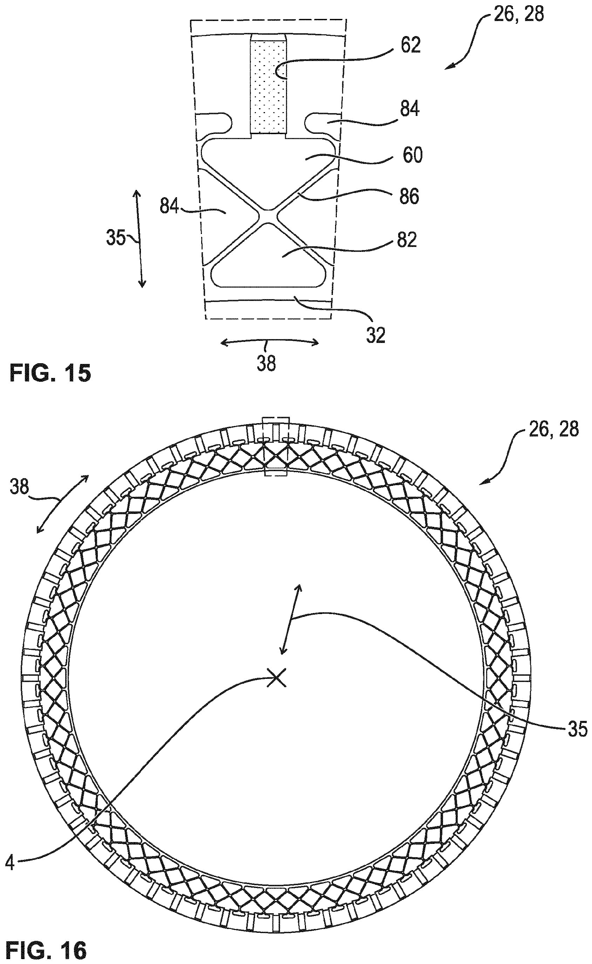

In Fig. 15 und Fig. 16 ist entsprechend der Fig. 13, 14 eine weitere Ausgestaltungsform der Teilkörper 26, 28 gezeigt, wobei auch hier der erste Hohlzylinder 30, die Speichen 34 sowie gegebenenfalls der dritte Hohlzylinder 36 nicht gezeigt sind. Im Vergleich zur vorherigen Ausführungsform sind die Kammern 60, die ersten Öffnungen 82 sowie die weiteren Öffnungen 84 als auch die Stege 86 und der zweite Hohlzylinder 32 abgeändert, wobei lediglich die Dicke des zweiten Hohlzylinders 32 in radialer Richtung 35 verringert ist. Der Querschnitt der Kammern 60 ist dreieckförmig mit abgerundeten Ecken, wobei das Dreieck ein gleichschenkeliges Dreieck ist, dessen Spitze radial nach innen weist. Der Querschnitt der ersten Öffnung 82 ist ebenfalls dreieckförmig und entspricht dem Querschnitt der jeweils zugeordneten Kammer 60, welcher jedoch um 180° derart gedreht ist, dass die beiden Spitzen aufeinander zu weisen. Die Stege 86 verlaufen im Wesentlichen geradlinig und sowohl in radialer als auch in tangentialer Richtung 35, 38 und schneiden sich unter einem Winkel von 100°. Infolgedessen ist ein Teil der weiteren Öffnungen 84 rautenförmig. Die zwischen den Taschen 62 angeordneten weiteren Öffnungen 84 weisen im Wesentlichen rechteckförmigen Querschnitt auf. Auf der radialen Innenseite des zweiten Hohlzylinders 32 schließen sich beispielsweise die Streben 34, der erste Hohlzylinder 30 sowie gegebenenfalls der dritte Hohlzylinder 36 entsprechend der in Fig. 3 bis 12 gezeigten Varianten an.

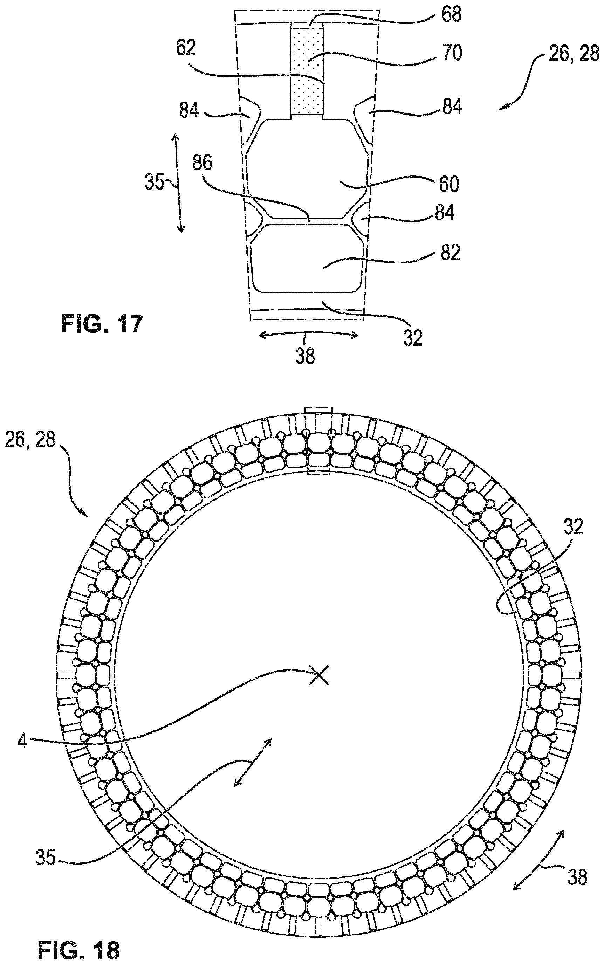

In Fig. 17 und Fig. 18 ist eine letzte Ausgestaltungsform der Teilkörper 26, 28 gezeigt. Bei dieser Ausgestaltungsform weisen die Kammern 60 einen wabenförmigen Querschnitt auf. Mit anderen Worten ist der Querschnitt jeweils ein regelmäßiges Achteck. Der Querschnitt der ersten Öffnung 82, welche sich jeweils wiederum zwischen dem zweiten Hohlzylinder 32 und der zugeordneten Kammer 60 befindet, ist im Wesentlichen quader- oder sechseckförmig. Der Querschnitt der weiteren Öffnungen 84 ist rautenförmig oder kreisförmig ausgestaltet. Infolgedessen verlaufen die Stege 86 im Wesentlichen geradlinig, wobei im Vergleich zur vorhergehenden Ausführungsform die Anzahl der Stege 86 erhöht ist. Aufgrund der wabenförmigen Ausgestaltung der Kammer 60 mit dem achteckigen Querschnitt ist eine vergleichsweise hohe Robustheit gegeben. Auf der radialen Innenseite des zweiten Hohlzylinders 32 schließen sich beispielsweise die Streben 34, der erste Hohlzylinder 30 sowie gegebenenfalls der dritte Hohlzylinder 36 entsprechend der in Fig. 3 bis 12 gezeigten Varianten an.

Bei den in Fig. 13 bis 18 gezeigten Ausgestaltungen sind die Kammern 60, die ersten Öffnungen 82 und die weiteren Öffnungen 84 bevorzugt mit dem Füllstoff 74 befüllt, welcher Epoxidharz ist. Infolgedessen ist die mechanische Integrität der Teilkörper 26, 28 weiter erhöht.

Zusammenfassend wird aufgrund der Ausgestaltung der Teilkörper 26, 28 der magnetische Widerstand erhöht, was zu einem erhöhten Drehmoment führt. Aufgrund der Ausgestaltung der Kammern 60 sowie der Streben 86 und der Speichen 34 ist jedoch eine vergleichsweise hohe Festigkeit gegeben. Wegen der unterschiedlichen Geometrien ist eine vergleichsweise hohe mechanische Steifigkeit gegeben, und der magnetische Widerstand in den Verstrebungen, insbesondere den Streben 86 und den Speichen 34, ist erhöht, weswegen ein erhöhtes Drehmoment erzielt ist. Auch weist die als Innenläufer ausgestaltete elektrische Maschine 2 aufgrund der radialen Anordnung der Magnete 70 ein sogenanntes "Spoke-Design" (Speichen-Design) auf.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

Bezugszeichenliste

2 elektrische Maschine
4 Rotationsachse
6 axiale Richtung
8 Gehäuse
10 A-seitiges Lagerschild
12 B-seitiges Lagerschild
14 Kugellager
16 Welle
17 Rotor

18    Rotorkörper
20    Luftspalt
22    Stator
24    Umrichter
26    erster Teilkörper
28    zweiter Teilkörper
30    erster Hohlzylinder
32    zweiter Hohlzylinder
33    Nut
34    Speiche
35    radiale Richtung
36    dritter Hohlzylinder
37    Öffnung
38    tangentiale Richtung
40    Lasche
42    Öse
44    Buchse
46    erste Abdeckung
48    zweite Abdeckung
50    Mutter
52    Loch
54    Bohrung
56    Achse
58    zweite Achse
60    Kammer
62    Tasche
64    Schlitz
66    Vorsprung
68    Öffnung
70    Magnet
72    Magnetisierungsrichtung
74    Füllstoff
76    zweiter Rotorkörper
78    Schulter
80    Manschette
82    erste Öffnung
84    weitere Öffnung
86    Steg

**Patentansprüche**

1.   Rotor (17) einer elektrischen Maschine (2), insbesondere Elektromotor, mit einem eine Welle (16) umfangsseitig umgebenden Rotorkörper (18), und mit einer Anzahl an Magneten (70), wobei jeder der Magneten (70) jeweils innerhalb einer radial verlaufenden Tasche (62) des Rotorkörpers (18) angeordnet ist,

- wobei jede der Taschen (62) mittels eines axial verlaufenden Schlitzes (64) mit jeweils einer radial innenliegenden Kammer (60) des Rotorkörpers (18) verbunden ist,
- **dadurch gekennzeichnet dass** der Rotorkörper (18) einen sich axial erstreckenden ersten Hohlzylinder (30) und einen sich axial erstreckenden zweiten Hohlzylinder (32) aufweist, der in radialer Richtung (35) zwischen dem ersten Hohlzylinder (32) und den Kammern (60) angeordnet ist,
- wobei der erste Hohlzylinder (30) und der zweite Hohlzylinder (32) mittels zumindest teilweise radial verlaufender Speichen (34) miteinander verbunden sind, und
- wobei die Speichen (34) radial und tangential verlaufen, und/oder wobei der Rotorkörper (18) einen sich axial erstreckenden dritten Hohlzylinder (36) aufweist, der in radialer Richtung (35) zwischen dem ersten Hohlzylinder (30) und dem zweiten Hohlzylinder (32) angeordnet ist.

2.   Rotor (17) nach Anspruch 1,
     **dadurch gekennzeichnet,**
     **dass** der Querschnitt jeder Kammer (60) gerundet oder ein regelmäßiges Vieleck ist.

3.   Rotor (17) nach Anspruch 1 oder 2,
     **dadurch gekennzeichnet,**
     **dass** die Ausdehnung jeder Kammer (60) in tangentialer Richtung (38) größer als die Ausdehnung der zugeordneten Tasche (62) in tangentialer Richtung (38) ist.

4.   Rotor (17) nach einem der Ansprüche 1 bis 3,
     **dadurch gekennzeichnet,**
     **dass** zwischen jeder Tasche (62) und dem zugeordneten Magneten (70) eine Spielpassung erstellt ist, und/oder dass die Magneten (70) in tangentialer Richtung (38) magnetisiert sind.

5.   Rotor (17) nach einem der Ansprüche 1 bis 4,
     **dadurch gekennzeichnet,**
     **dass** jede Kammer (60) mit einem para- oder diamagnetischen Füllstoff (74) befüllt ist, insbesondere Epoxidharz, und/oder dass der Rotorkörper (18) ein Blechpaket ist.

6.   Rotor (17) nach einem der Ansprüche 1 bis 5,
     **dadurch gekennzeichnet,**
     **dass** jede Tasche (62) radial außen eine Öffnung (68) aufweist, deren Querschnitt insbesondere trapezförmig ist.

7.   Rotor (17) nach einem der Ansprüche 1 bis 6,
     **dadurch gekennzeichnet,**
     **dass** die Magneten (70) quaderförmig ausgestaltet sind, und/oder dass die Anzahl der Magneten (70) zwischen 40 und 80, insbesondere gleich 60, ist.

8.   Rotor (17) nach einem der Ansprüche 1 bis 7,
     **gekennzeichnet durch,**
     einen baugleichen zweiten Rotorkörper (76), der in axialer Richtung (6) an den Rotorkörper (18) gefügt ist, wobei die Taschen (62) des Rotorkörpers (18) und des zweiten Rotorkörpers (76) in tangentialer Richtung (38) zueinander versetzt sind.

**9.** Elektrischen Maschine (2), insbesondere Elektromotor, mit einem Rotor (17) nach einem der Ansprüche 1 bis 8, und mit einem den Rotor (17) umfangsseitig umgebenden Stator (22).

**Claims**

**1.** Rotor (17) of an electric machine (2), in particular an electric motor, having a rotor body (18) surrounding a shaft (16) circumferentially, and having a number of magnets (70), wherein each of the magnets (70) is each arranged within a radially running pocket (62) of the rotor body (18),

- wherein each of the pockets (62) is connected by means of an axially running slot (64) to a respectively radially inner chamber (60) of the rotor body (18),
- **characterized in that**
the rotor body (18) has an axially extending first hollow cylinder (30) and an axially extending second hollow cylinder (32) which, in the radial direction (35), is arranged between the first hollow cylinder (32) and the chambers (60),
- wherein the first hollow cylinder (30) and the second hollow cylinder (32) are connected to each other by means of spokes (34) running at least partly radially, and
- wherein the spokes (34) run radially and tangentially, and/or wherein the rotor body (18) has an axially extending third hollow cylinder (36) which, in the radial direction (35), is arranged between the first hollow cylinder (30) and the second hollow cylinder (32).

**2.** Rotor (17) according to Claim 1,
**characterized in that**
the cross section of each chamber (60) is rounded or is a regular polygon.

**3.** Rotor (17) according to Claim 1 or 2,
**characterized in that**
the extent of each chamber (60) in the tangential direction (38) is greater than the extent of the associated pocket (62) in the tangential direction (38).

**4.** Rotor (17) according to one of Claims 1 to 3,
**characterized in that**
a clearance fit is created between each pocket (62) and the associated magnet (70), and/or **in that** the magnets (70) are magnetized in the tangential direction (38).

**5.** Rotor (17) according to one of Claims 1 to 4,
**characterized in that**
each chamber (60) is filled with a paramagnetic or diamagnetic filler (74), in particular an epoxy resin, and/or **in that** the rotor body (18) is a laminated core.

**6.** Rotor (17) according to one of Claims 1 to 5,
**characterized in that**
each pocket (62) has an opening (68) radially on the outside, the cross section of which is in particular trapezoidal.

**7.** Rotor (17) according to one of Claims 1 to 6,
**characterized in that**
the magnets (70) are cuboidal, and/or **in that** the number of magnets (70) is between 40 and 80, in particular equal to 60.

**8.** Rotor (17) according to one of Claims 1 to 7,
**characterized by**
an identical second rotor body (76), which is joined to the rotor body (18) in the axial direction (6), wherein the pockets (62) of the rotor body (18) and of the second rotor body (76) are offset relative to one another in the tangential direction (38).

**9.** Electric machine (2), in particular an electric motor, having a rotor (17) according to one of Claims 1 to 8, and having a stator (22) surrounding the rotor (17) circumferentially.

**Revendications**

**1.** Rotor (17) d'une machine électrique (2), notamment d'un moteur électrique, avec un corps de rotor (18) entourant un arbre (16) sur sa périphérie, et avec un certain nombre d'aimants (70), chacun des aimants (70) étant agencé respectivement à l'intérieur d'une poche (62) s'étendant radialement du corps de rotor (18),

- chacune des poches (62) étant reliée au moyen d'une fente (64) s'étendant axialement à une chambre (60) radialement intérieure du corps de rotor (18),
- **caractérisé en ce que** le corps de rotor (18) présente un premier cylindre creux (30) s'étendant axialement et un deuxième cylindre creux (32) s'étendant axialement, qui est agencé dans la direction radiale (35) entre le premier cylindre creux (32) et les chambres (60),
- le premier cylindre creux (30) et le deuxième cylindre creux (32) étant reliés entre eux au moyen de rayons (34) s'étendant au moins partiellement radialement, et
- les rayons (34) s'étendant radialement et tangentiellement, et/ou le corps de rotor (18) présentant un troisième cylindre creux (36) s'étendant axialement, qui est agencé dans la direction radiale (35) entre le premier cylindre creux (30) et le deuxième cylindre creux (32) .

2. Rotor (17) selon la revendication 1, **caractérisé en ce que** la section transversale de chaque chambre (60) est arrondie ou est un polygone régulier.

3. Rotor (17) selon la revendication 1 ou 2, **caractérisé en ce que** l'étendue de chaque chambre (60) dans la direction tangentielle (38) est supérieure à l'étendue de la poche associée (62) dans la direction tangentielle (38).

4. Rotor (17) selon l'une quelconque des revendications 1 à 3, **caractérisé en ce qu'**un ajustement avec jeu est réalisé entre chaque poche (62) et l'aimant associé (70), et/ou **en ce que** les aimants (70) sont magnétisés dans la direction tangentielle (38).

5. Rotor (17) selon l'une quelconque des revendications 1 à 4, **caractérisé en ce que** chaque chambre (60) est remplie d'une matière de remplissage para- ou diamagnétique (74), notamment de résine époxy, et/ou **en ce que** le corps de rotor (18) est un paquet de tôles.

6. Rotor (17) selon l'une quelconque des revendications 1 à 5, **caractérisé en ce que** chaque poche (62) présente radialement à l'extérieur une ouverture (68) dont la section transversale est notamment trapézoïdale.

7. Rotor (17) selon l'une quelconque des revendications 1 à 6, **caractérisé en ce que** les aimants (70) sont configurés sous forme parallélépipédique et/ou **en ce que** le nombre d'aimants (70) est compris entre 40 et 80, notamment est égal à 60.

8. Rotor (17) selon l'une quelconque des revendications 1 à 7, **caractérisé par** un deuxième corps de rotor (76) de construction identique, qui est assemblé au corps de rotor (18) dans la direction axiale (6), les poches (62) du corps de rotor (18) et du deuxième corps de rotor (76) étant décalées les unes par rapport aux autres dans la direction tangentielle (38).

9. Machine électrique (2), notamment moteur électrique, avec un rotor (17) selon l'une quelconque des revendications 1 à 8, et avec un stator (22) entourant le rotor (17) sur sa périphérie.

**FIG. 1**

**FIG. 2**

FIG. 4

FIG. 3

**FIG. 5**

**FIG. 6**

FIG. 7

26, 28

62 60

37
37
37

32

30

35

4

34

38

**FIG. 8**

26, 28

36

34

37

37

37

30

62

60

32

35

4

38

**FIG. 9**

FIG. 10

FIG. 11

FIG. 12

FIG. 13

FIG. 14

**FIG. 15**

**FIG. 16**

FIG. 17

FIG. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015357982 A1
- EP 0413183 A1
- DE 102015216051 A1
- US 2014225470 A